# EUROPÄISCHE PATENTSCHRIFT

(11) **EP 1 949 082 B1**
(45) Veröffentlichungstag und Bekanntmachung des Hinweises auf die Patenterteilung: **11.03.2020**
(21) Anmeldenummer: 06818437.3
(22) Anmeldetag: 09.11.2006
(51) Int. Cl.: G01N 21/64

(54) **MULTISPEKTRALE BELEUCHTUNGSVORRICHTUNG**
MULTISPECTRAL ILLUMINATION DEVICE
DISPOSITIF D ÉCLAIRAGE MULTISPECTRAL

(30) Priorität: 14.11.2005 DE 102005054184
(43) Veröffentlichungstag der Anmeldung: 30.07.2008
(73) Patentinhaber: Carl Zeiss Microscopy GmbH, 07745 Jena (DE)
(72) Erfinder: WESTPHAL, Peter, 07743 Jena (DE); BUBLITZ, Daniel, 07646 Rausdorf (DE)
(74) Vertreter: Kintzel, Klaus-Peter
(86) Internationale Anmeldenummer: PCT/EP2006/010745
(87) Internationale Veröffentlichungsnummer: WO 2007/054301

(56) Entgegenhaltungen:
- WO-A-03/021212
- WO-A-2004/086117
- US-A- 6 096 272
- US-A1- 2005 224 692

## Beschreibung

Die vorliegende Erfindung bezieht sich auf eine multispektrale Beleuchtungsvorrichtung sowie optische Vorrichtungen, insbesondere Abbildungs-, Untersuchungs-, Beobachtungs- und Projektionsvorrichtungen, mit einer solchen Beleuchtungsvorrichtung.

Ein wichtiges Einsatzgebiet von Beleuchtungsvorrichtungen sind Abbildungs- bzw. Untersuchungsvorrichtungen, die dazu vorgesehen sind, Bilder eines zu untersuchenden Objekts bzw. einer Probe zu erzeugen. Typische Beispiele für solche Abbildungsvorrichtungen sind Mikroskope und insbesondere Mikroskope mit einer Weitfeldoptik, die einen vorgegebenen Bereich der abzubildenden bzw. zu untersuchenden Probe, und nicht nur einen kleinen punktförmigen Bereich der Probe, auf eine Bildebene abbildet. Eine besondere Rolle kommt bei der optischen Untersuchung von Proben der Fluoreszenz-Untersuchung zu. Dabei wird die Probe mit Anregungsstrahlung mit einem geeigneten Anregungsspektrum, das in Abhängigkeit von einem oder mehreren Fluoreszenzfarbstoffen gewählt ist, bestrahlt. Befinden sich in der Probe diese Fluoreszenzfarbstoffe, so wechselwirken sie mit der Anregungsstrahlung und emittieren Fluoreszenzstrahlung, die für den Fluoreszenzfarbstoff charakteristisch ist. Auf diese Weise ist eine Detektion von Fluoreszenzfarbstoffen in einer Probe möglich. Dabei kann nicht nur das Vorhandensein von Fluoreszenzfarbstoffen, sondern auch deren Konzentration ermittelt werden.

Ein wichtiges Anwendungsgebiet von Fluoreszenzuntersuchungen ist die Molekularbiologie. Dabei werden Fluoreszenzfarbstoffe verwendet, die an vorgegebene Stoffe in einer biologischen Probe spezifisch binden und dann in gebundenem Zustand detektiert werden können. Es ist so ein Rückschluß auf das Vorhandensein und die Konzentration des vorgegebenen Stoffs in der Probe möglich. Für solche Untersuchungen werden sogenannte Fluoreszenz-Reader eingesetzt, die zur Untersuchung von Bio-Chips mit mehreren, meist sogar sehr vielen, voneinander abgegrenzten Bereichen mit jeweils unterschiedlicher chemischer Zusammensetzung ausgelegt sind.

Statt Fluoreszenzfarbstoffen können auch Nanopartikel, beispielsweise Quantum Dots, verwendet werden, die bei wenigstens einer Wellenlänge fluoreszieren.

Bei solchen Fluoreszenzuntersuchungen treten zwei Grundprobleme auf. Erstens sind die Fluoreszenzintensitäten häufig sehr gering, so daß Einflüsse anderer optischer Strahlung in benachbarten Wellenlängenbereichen oder anderen Ursprungs auf die Detektion der Fluoreszenzstrahlung möglichst weit reduziert werden sollten, um ein günstiges Signal-/Rausch-Verhältnis zu erhalten. Dazu werden typischerweise Beleuchtungsvorrichtungen verwendet, die Anregungsstrahlung mit einem nur sehr schmalen Anregungsspektrum abgeben. Zum anderen werden im Detektionsstrahlengang für die Fluoreszenzstrahlung von der Probe zu einem Detektor Emissionsfilter eingesetzt, die vorzugsweise nur Strahlung im Wellenlängenbereich der Fluoreszenzstrahlung durchlassen.

Zweitens sind für einen vorgegebenen Fluoreszenzfarbstoff sowohl das Spektrum der Strahlung, mit der Fluoreszenz des Farbstoffs anregbar ist, als auch das Fluoreszenzspektrum spezifisch, so daß zur Detektion verschiedener Fluoreszenzfarbstoffe verschiedene Kombinationen von Anregungsstrahlung und Emissionsfiltern notwendig sind.

Zur schnellen Untersuchung von Proben auf verschiedene Fluoreszenzfarbstoffe wäre es daher wünschenswert, über eine Abbildungs- bzw. Untersuchungsvorrichtung zu verfügen, die einen Wechsel zwischen den verschiedenen Anregungs- und/oder Emissionsspektren zuläßt.

Hierzu kann beispielsweise statt eines festen Emissionsfilters im Detektionsstrahlengang ein Filterrad mit verschiedenen Emissionsfiltern verwendet werden, die jeweils für ein vorgegebenes Fluoreszenzspektrum vorgesehen sind. Als Beleuchtungsquelle kann insbesondere eine Weißlichtquelle verwendet werden. Diese Lösung hat unter anderem den Nachteil, daß zum einen nur eine sequentielle Untersuchung einer Probe auf mehrere Fluoreszenzfarbstoffe durchführbar ist und zum anderen zum Wechsel zwischen den Untersuchungen mechanische Teile bewegt werden müssen.

Zusätzlich oder alternativ kann eine multispektrale Beleuchtungsvorrichtung verwendet werden, mit der sequentiell und/oder parallel optische Strahlung in wenigstens zwei verschiedenen Wellenlängenbereichen abgegeben werden kann. Dabei wird unter optischer Strahlung in wenigstens zwei verschiedenen Wellenlängenbereichen Strahlung verstanden, deren Intensität in den Wellenlängenbereichen ausgeprägte Maxima hat, wobei die Intensität nicht unbedingt in dem Bereich zwischen den beiden Wellenlängenbereichen verschwinden muß.

In DE 103 14 125 A1 ist eine Anordnung zur Beleuchtung von Objekten mit Licht unterschiedlicher Wellenlänge bei Mikroskopen, automatischen Mikroskopen und Geräten für fluoreszenzmikroskopische Anwendungen beschrieben, die LED-Lichtquellen zur Objektbeleuchtung umfaßt, welche im Beleuchtungsstrahlengang des Mikroskops oder Gerätes angeordnet sind. Zur Bewegung wenigstens einer der Leuchtdioden in einen Beleuchtungsstrahlengang ist eine um eine Drehachse drehbare Aufnahmevorrichtung mit Halterungen für jeweils mindestens eine der Leuchtdioden vorgesehen. Mittels einer Antriebseinrichtung ist die Aufnahmevorrichtung einstellbar, so die Leuchtdiode mit der jeweils für Messungen und/oder Beobachtungen benötigten Schwerpunktwellenlänge in den Beleuchtungsstrahlengang bewegt werden kann.

Auch diese Lösung leidet darunter, daß mechanisch bewegte Teile notwendig sind und nur eine sequentielle Untersuchung möglich ist.

Die Verwendung mechanisch bewegter Teile hat mehrere Nachteile. So erfordert der Wechsel von der Detektion eines Fluoreszenzfarbstoffs zu einem anderen eine gewisse Zeit, die die Untersuchung von Proben verzögert. Darüber hinaus ist der Aufbau kompliziert und relativ verschleißanfällig. Schließlich ist es sehr aufwendig, die erforderlichen Genauigkeitsbedingungen bei der Einstellung der Filter oder der Lichtquellen auf den Detektions- bzw. Beleuchtungsstrahlengang zu erfüllen.

In US 6 372 485 und US20050224692A1 sind Beleuchtungsvorrichtungen mit drei Leuchtdioden beschrieben, deren Strahlung in denselben Beleuchtungsstrahlengang eingekoppelt wird. Die beschriebenen Anordnungen haben jedoch den Nachteil, daß die Leistung der Beleuchtungsstrahlung in dem gewünschten Wellenlängenbereich verglichen mit der Strahlungsleistung der Leuchtdioden nicht sehr hoch ist. Weiter ist läßt die wenig kompakte Bauweise keinen hohen Lichtleitwert zu. Darüber hinaus kann mit jeweils verwendeten drei Leuchtdioden kein für die Anregung von Fluoreszenzstrahlung ausreichender Spektralbereich abgedeckt werden.
Der vorliegenden Erfindung liegt daher die Aufgabe zugrunde, eine Beleuchtungsvorrichtung zur Abgabe von optischer Strahlung mit vorgegebenen wählbaren Spektren bereitzustellen, die einfach aufgebaut ist und nur geringe Verluste der Strahlungsleistung aufweist.

Die Aufgabe wird gelöst durch eine optische Vorrichtung gemäß Anspruch 1.

Die erfindungsgemäße Beleuchtungsvorrichtung verfügt also über keine beweglichen Teile, mittels derer zur Umschaltung zwischen Wellenlängenbereich eine der Halbleiterstrahlungsquellen oder ein Umlenkelement für von diesen abgegebene optische Strahlung bewegt werden muß. Vielmehr sind nur wenigstens vier Halbleiterstrahlungsquellen in Kombination mit wenigstens drei entsprechenden Farbteilern vorgesehen, um wahlweise optische Beleuchtungsstrahlung mit einem vorgegebenen Spektrum zu erzeugen.

Bei den Halbleiterstrahlungsquellen kann es sich um beliebige, optische Strahlung emittierende Halbleiterbauelemente handeln. Beispielsweise können Laserdioden oder Superlumineszenzdioden verwendet werden. Vorzugsweise werden jedoch lichtemittierende Dioden bzw. Leuchtdioden verwendet. Besonders bevorzugt sind dabei Hochleistungsleuchtdioden, die optische Strahlung hoher Intensität abstrahlen. Vorzugsweise werden leistungsstarke farbige Leuchtdioden für die Beleuchtungsquelle eingesetzt. Um vorgegebene Wellenlängenbereiche abdecken zu können, können auch Leuchtdioden mit aufgebrachten Leuchtstoffen zur Farbkonversion, die durch von dem Halbleitermaterial der Leuchtdioden abgegebene optische Strahlung angeregt optische Strahlung in einem anderen Wellenlängenbereich abgeben, eingesetzt werden.

Bei den Leuchtdioden kann es sich insbesondere um solche mit einer planen Fläche, aus der die optische Strahlung austritt oder Leuchtdioden mit einer über der Fläche angeordneten transparenten Kuppel zur Reduktion des Brechungsindexsprungs zum Halbleitermaterial handeln.

Die Halbleiterstrahlungsquellen sind zur Abgabe optischer Strahlung in jeweils unterschiedlichen Emissionswellenlängenbereichen ausgebildet, d.h. sie weisen jeweils unterschiedliche Emissionswellenlängenbereiche bzw. Emissionsspektren auf. Darunter wird verstanden, daß die charakteristischen Wellenlängen der jeweiligen Emissionsspektren, beispielsweise Intensitätsmaxima der jeweiligen Emissionsspektren oder Schwerpunktwellenlänge der jeweiligen Emissionsspektren oder deren dominante Wellenlängen, voneinander, vorzugsweise um mehr als 50 nm, beabstandet sind. Insbesondere überlappen sich Emissionspeaks der Halbleiterstrahlungsquellen wenigstens innerhalb der Halbwertsbreite der Peaks vorzugsweise nicht oder nur in den Flanken der Emissionspeaks. Die Verwendung von vier Halbleiterstrahlungsquellen erlaubt eine gute Abdeckung eines gegebenen Spektralbereichs, insbesondere des gesamten optischen Spektrums, insbesondere des sichtbaren Spektrums sowie des UV- und NIR-Bereichs. Vorzugsweise ist dazu wenigstens ein der Halbleiterstrahlungsquellen eine UV- oder NIR-Strahlungsquelle mit einer charakteristischen Emissionswellenlänge im UV- bzw. NIR- Bereich.

Um eine für die jeweilige Anwendung hinreichende Strahlungsleistung in einem jeweiligen Emissionswellenlängenbereich zur Verfügung stellen zu können, ist es auch möglich, statt nur einer Halbleiterstrahlungsquelle für einen gegebenen Emissionswellenbereich ein entsprechendes Feld von gleichen Halbleiterstrahlungsquellen zu verwenden. Beispielsweise kann ein Feld von gleichen Leuchtdioden verwendet werden.

Die von den Halbleiterstrahlungsquellen jeweils abgegebene optische Strahlung wird in einen gemeinsamen Beleuchtungsstrahlengangabschnitt eingekoppelt, wozu die Farbteiler dienen. Unter einem Farbteiler wird dabei jedes optische Element verstanden, das in einem vorgegebenen Wellenlängenbereich transmissiv und in anderen vorgegebenen Wellenlängenbereichen reflektiv ist. Bei der Beleuchtungsvorrichtung sind wenigstens dreien der mindestens vier Halbleiterstrahlungsquellen jeweils Farbteiler zugeordnet, die für die optische Strahlung der jeweiligen Halbleiterstrahlungsquelle zumindest im Bereich des Emissionswellenlängenbereichs, insbesondere der charakteristischen Emissionswellenlänge, entweder überwiegend, vorzugsweise im wesentlichen, reflektiv oder überwiegend, vorzugsweise im wesentlichen transmissiv sind. Durch entsprechendes Ein- bzw. Ausschalten der Halbleiterstrahlungsquellen kann so entlang des gemeinsamen Beleuchtungsstrahlengangabschnitts optische Strahlung entsprechend den Emissionswellenlängen der jeweils eingeschalteten Halbleiterstrahlungsquellen als Beleuchtungsstrahlung abgegeben werden. Damit ist ein Wechsel der Halbleiterstrahlungsquellen durch mechanische Bewegung in einen Beleuchtungsstrahlengang nicht notwendig, was mehrere Vorteile hat. So ist ein Wechsel zwischen verschiedenen Emissionswellenlängenbereichen sehr schnell möglich. Darüber hinaus ist der Aufbau der Vorrichtung sehr einfach und insbesondere auch verschleißarm.

Gegenüber konventionellen Lichtquellen wie Bogen- oder Halogenlampen hat die Verwendung von Halbleiterstrahlungsquellen, insbesondere Leuchtdioden, darüber hinaus den Vorteil, daß diese eine wesentlich längere Lebensdauer aufweisen. Darüber hinaus ist die Wärmeentwicklung durch Halbleiterstrahlungsquellen bei deren Betrieb wesentlich geringer als bei Bogen- oder Halogenlampen. Eine aktive Kühlung der Halbleiterstrahlungsquellen kann daher unterbleiben, eine passive Kühlung kann gegenüber der Verwendung von Bogen- oder Halogenlampen deutlich vereinfacht werden.

In den Strahlengangabschnitten zwischen den jeweiligen Halbleiterstrahlungsquellen und den Farbteilern ist jeweils eine Kollimationseinrichtung angeordnet, die die optische Strahlung der jeweiligen Halbleiterstrahlungsquelle sammelt bzw. genauer im wesentlichen kollimiert. Dadurch kann ein sehr großer Anteil, vorzugsweise mehr als 90 %, der von der Halbleiterstrahlungsquelle abgegebenen optischen Strahlung auch auf den Farbteiler gerichtet werden, so daß insgesamt eine sehr hohe Effizienz der Halbleiterstrahlungsquelle in der Beleuchtungsvorrichtung erreicht werden kann. Die Kollimation hat darüber hinaus den Vorteil, daß das bei der Kollimation entstehende wenigstens quasi-parallele Strahlenbündel die Verwendung von Interferenzfiltern erlaubt, die eine besonders präzise Filterung erlauben. Auch die Funktion der Farbteiler ist bei Verwendung von kollimierter Strahlung in der Regel besser als bei Verwendung von unkollimierter Strahlung.

Insgesamt wird so eine Beleuchtungsvorrichtung erzeugt, die nicht nur durch den Verzicht auf mechanisch zu bewegende Teile einen sehr einfachen und verschleißarmen Aufbau aufweist, sondern auch einen bezogen auf die Strahlungsleistung der Halbleiterstrahlungsquellen sehr hohe Beleuchtungsstrahlungsleistung ergibt.

Eine mögliche Anwendung ist das spektrale Entmischen bei Mehrfarbenfluoreszenz. Dabei kann vorteilhaft genutzt werden, daß über Ein- und Ausschalten einzelner Halbleiterstrahlungsquellen bestimmte Farbstoffe kaum und andere dagegen maximal angeregt werden. Anhand mehrerer solcher Messungen kann rechnerisch das Mengenverhältnis der Farbstoffe bestimmt werden.

Darüber hinaus kann auch ein Bildversatz (pixel-shift), der häufig durch mechanischen Filterwechsel entsteht, vermieden werden. Durch die schnelle Schaltbarkeit der Halbleiterstrahlungsquellen kann die Strahlungsbelastung der Probe minimiert werden. Ein mechanischer Shutter für die Beleuchtung ist nicht mehr nötig.

Die Beleuchtungsquelle ist für alle Arten von Mikroskopen geeignet. Hierzu gehören z.B. Universal-Mikroskope, optische Reader (u.a. Biochip-Reader, Titerplatten-Reader), Stereo-Mikroskope, Operations-Mikroskope und ophthalmologische Geräte.

Vorzugsweise umfaßt die Beleuchtungsvorrichtung eine Steuereinrichtung, mittels derer die Halbleiterstrahlungsquellen unabhängig voneinander an- und abschaltbar sind. Diese Ausführungsform hat den Vorteil, daß eine Wahl zwischen verschiedenen Emissionswellenlängenbereichen der durch den gemeinsamen Beleuchtungsstrahlengangabschnitt abgegebenen Beleuchtungsstrahlung einfach möglich ist. Die Steuereinrichtung kann dazu über entsprechende von einem Benutzer zu bedienende Bedienelemente, beispielsweise Schalter verfügen. Vorzugsweise ist jedoch ein Steuereingang vorgesehen, durch den die Steuereinrichtung Steuersignale empfangen kann, auf die hin die Steuereinrichtung eine oder mehrere der Halbleiterstrahlungsquellen an- und abschaltet. Dabei können die Halbleiterstrahlungsquellen einzeln oder auch in Kombination miteinander ein- und ausgeschaltet werden. Diese Ausführungsform erlaubt einen besonders schnellen Wechsel zwischen verschiedenen Emissionswellenlängenbereichen und, bei einer Kombination mehrerer Emissionswellenlängenbereiche, eine simultane Beleuchtung mit Strahlung in verschiedenen Emissionswellenlängenbereichen und damit eine simultane Detektion mehrerer Fluoreszenzfarbstoffe in einer Probe, wenn die Emissionswellenlängenbereiche der Halbleiterstrahlungsquellen und die Farbteiler entsprechend gewählt sind.

Dabei ist es besonders bevorzugt, daß die Steuereinrichtung so ausgebildet ist, daß die Emissionsstrahlungsleistungen der Halbleiterstrahlungsquellen unabhängig voneinander einstellbar sind. Diese Ausführungsform hat den Vorteil, daß die Strahlungsleistungen der einzelnen Halbleiterstrahlungsquellen, im Unterschied zu Bogen- oder Halogenlampen, ohne eine Änderung des Farbspektrums genau eingestellt werden können. Insbesondere ist es möglich, die Strahlungsleistungen so einzustellen, daß die von den Halbleiterstrahlungsquellen in den gemeinsamen Beleuchtungsstrahlengangabschnitt abgegebene optische Strahlung jeweils die gleiche Emissionsstrahlungsleistung aufweist.

Grundsätzlich können verschiedene Anzahlen von Halbleiterstrahlungsquellen verwendet werden. Vorzugsweise verfügt die Beleuchtungsvorrichtung jedoch über insgesamt fünf bis acht Halbleiterstrahlungsquellen mit jeweils verschiedenen Emissionswellenlängenbereichen. Wenigstens vier bis sieben dieser Halbleiterstrahlungsquellen sind dann entsprechende Farbteiler zugeordnet, über die die Emissionsstrahlung der Halbleiterstrahlungsquellen in den gemeinsamen Beleuchtungsstrahlengangabschnitt eingekoppelt wird. Auf diese Weise ist eine besonders gute Abdeckung eines gegebenen Spektralbereichs, insbesondere des gesamten optischen Spektrums möglich.

Für eine besonders kompakte Form der Beleuchtungsvorrichtung bilden die Strahlengänge von den Halbleiterstrahlungsquellen bis unmittelbar hinter den letzten Farbteiler vor dem gemeinsamen Beleuchtungsstrahlengangabschnitt vorzugsweise einen binären Baum. Unter einem binären Baum wird dabei, wie in der Graphentheorie, ein Baum mit einer Wurzel, von der Wurzel ausgehenden Ästen, mehreren durch Äste mit der Wurzel verbundenen Knoten und an den freien Enden von von den Knoten oder der Wurzel ausgehenden Ästen sitzenden Blättern verstanden, bei dem jeder Knoten mit höchstens zwei anderen Knoten verbunden ist. Ein solcher binärer Baum hat daher bei 2^{N}-1 Knoten 2^{N} Blätter, die bei der Beleuchtungsvorrichtung durch die Halbleiterstrahlungsquellen gegeben sind. N bezeichnet dabei eine natürliche Zahl größer als 1. Die Knoten und die Wurzel entsprechen jeweils den Farbteilern, während die Halbleiterstrahlungsquellen die Blätter darstellen. Die Beleuchtungsvorrichtung enthält daher 2^{N} Halbleiterstrahlungsquellen mit jeweils unterschiedlichen Emissionswellenlängenbereichen und wenigstens 2^{N}-1 entsprechende Farbteiler. Diese Ausführungsform hat den Vorteil, daß die Beleuchtungsvorrichtung einen besonders kompakten Aufbau aufweisen kann.

Die Kollimationseinrichtungen können jeweils gleich oder verschieden ausgebildet sein. Insbesondere können beispielsweise Konzentratoren oder holographische oder diffraktive Elemente verwendet werden, die eine Kollimation der von der jeweiligen Halbleiterstrahlungsquelle abgegebenen optischen Strahlung erlauben. Vorzugsweise umfaßt jedoch wenigstens eine der Kollimationseinrichtungen eine asphärische Linse oder einen asphärischen Spiegel. Diese Ausführungsform der Kollimationseinrichtung hat den Vorteil, daß die asphärische Ausbildung eine besonders gute Bündelung der von der jeweiligen Halbleiterstrahlungsquelle abgegebenen optischen Strahlung erlaubt und damit Strahlungsverluste durch eine wenig gerichtete Abstrahlung der optischen Strahlung von der Halbleiterstrahlungsquelle reduziert werden können.

Um die Beleuchtungsstrahlung mit möglichst schmalen und scharf definierten Spektren bereitstellen zu können, ist in wenigstens einem Strahlengangabschnitt von einer der Halbleiterstrahlungsquellen zu einem der Farbteiler, zwischen der in dem Strahlengangabschnitt angeordneten Kollimationseinrichtung und dem Farbteiler, wenigstens ein Bandpaßfilter angeordnet . Der Bandpaßfilter dient dabei dazu, lange spektrale Ausläufer der Emissionsspektren der Halbleiterstrahlungsquellen auszublenden und damit möglicherweise störende Untergrundsignale zu vermeiden. Dies hat den Vorteil, daß eine spätere multispektrale Auswertung bei einer Fluoreszenzuntersuchung beispielsweise, erleichtert wird. Der Bandpaßfilter hat vorzugsweise eine spektrale Breite von weniger als 100 nm.

Halbleiterstrahlungsquellen sind bislang bei wirtschaftlich vertretbaren Kosten nicht für beliebige Emissionswellenlängenbereiche verfügbar. Es ist daher bevorzugt, daß die Beleuchtungsvorrichtung wenigstens eine Halbleiterstrahlungsquelle mit wenigstens einem Leuchtstoff zur Farbkonversion umfaßt, in deren Strahlengang ein Bandpaßfilter angeordnet ist und deren Strahlung ebenfalls in den gemeinsamen Beleuchtungsstrahlengangabschnitt eingekoppelt wird. Der Bandpaßfilter befindet sich dabei vorzugsweise zwischen einer der Halbleiterstrahlungsquelle zugeordneten Kollimationseinrichtung und der Halbleiterstrahlungsquelle selbst. Unter einer Farbkonversion durch einen Leuchtstoff wird dabei verstanden, daß der Leuchtstoff von einer strahlungsemittierenden Schicht der Halbleiterstrahlungsquelle abgegebene Strahlung durch Fluoreszenz und/oder Phosphoreszenz in Strahlung in dem gewünschten Wellenlängenbereich, d.h. Strahlung anderer Farbe, konvertiert. Der Bandpaßfilter ist so gewählt, daß die Strahlung der Halbleiterstrahlungsquelle spektral auf einen geeigneten Wellenlängenbereich beschränkt wird. Vorzugsweise liegt jener Bereich im Bereich von 570 nm. Diese Ausführungsform hat den Vorteil, daß Lücken im von Halbleiterstrahlungsquellen abdeckbaren Wellenlängenbereich des optischen Spektrums gefüllt werden können, indem ein entsprechender Bandpaßfilter verwendet wird.

Grundsätzlich können beliebige Farbteiler verwendet werden, die eine Einkopplung von optischer Strahlung in den jeweiligen Emissionswellenlängenbereichen der Halbleiterstrahlungsquellen in den gemeinsamen Beleuchtungsstrahlengangabschnitt erlauben. Vorzugsweise sind drei der Farbteiler in einem gleichen Strahlengangabschnitt der Beleuchtungsvorrichtung angeordnet und besitzen Filterkanten bei Wellenlängen, die entlang des Strahlengangabschnitts monoton steigen oder fallen. Die Halbleiterstrahlungsquellen, deren Emissionsstrahlung durch diese Farbteiler hindurchtritt, weisen dann Emissionswellenlängenbereiche auf, die bzw. deren charakteristische Emissionswellenlänge in der entsprechenden Reihenfolge monoton steigen oder fallen. Als Farbteiler können dabei insbesondere solche mit einem spektralen Transmissionsvermögen in Stufenform, d.h. Stufenfilter, oder in Bandform eingesetzt werden. Die Wellenlängen, bei den die Stufen auftreten können dann jeweils monoton steigen oder fallen. Diese Wahl der Farbteiler hat den Vorteil, daß eine sukzessive Einkopplung der optischen Strahlung mit jeweils unterschiedlichen Emissionswellenlängenbereichen mit nur geringen Verlusten erfolgen kann.

Vorzugsweise ist im gemeinsamen Beleuchtungsstrahlengangabschnitt nach den Farbteilern eine Homogenisierungseinrichtung angeordnet. Die Homogenisierungseinrichtung, die zur Vergleichmäßigung der Intensitätsverteilung der von einer oder mehreren der Halbleiterstrahlungsquellen abgegebenen optischen Strahlung über den Querschnitt des resultierenden Beleuchtungsstrahlenbündels dient, hat den Vorteil, daß eine gleichmäßige Ausleuchtung einer Probe leicht möglich ist. Als Homogenisierungseinrichtung können insbesondere transparente Stäbe oder Hohlstäbe mit reflektierenden Seitenwänden, diffraktiv optische Elemente oder Streuscheiben verwendet werden. Die Verwendung von Stäben bzw. Hohlstäben mit reflektierenden Wänden hat den Vorteil, daß die Verluste darin besonders niedrig sind.

Vorzugsweise sind die Lichtleitwerte der Halbleiterstrahlungsquellen und der nachfolgenden optischen Elemente der Beleuchtungsvorrichtung zur Maximierung des Energieflusses der abzugebenden Strahlung aneinander angepaßt. Auf diese Weise können insbesondere durch die geometrische Anordnung der Halbleiterstrahlungsquellen und der optischen Elemente bedingte Verluste minimiert werden, so daß Beleuchtungsstrahlung mit einer relativ zur Strahlungsleistung der Halbleiterbauelemente hohen Intensität erzielt werden kann.

Die Beleuchtungsvorrichtung braucht nicht unbedingt zur Erzeugung von optischer Strahlung in nur einem der Emissionswellenlängenbereiche verwendet zu werden. So ist bei einer bevorzugten Ausführungsform die Steuereinrichtung dazu ausgebildet, wenigstens zwei der Halbleiterstrahlungsquellen zur Erzeugung von Weißlicht variabler Farbtemperatur über additive Farbmischung der von den wenigstens zwei Halbleiterstrahlungsquellen abgegebenen optischen Strahlung anzusteuern. Diese Ausführungsform hat den Vorteil, daß einfach Licht einer vorgegebenen Farbtemperatur erzeugt werden kann.

Die Beleuchtungsvorrichtung eignet sich allgemein für Beleuchtungszwecke, die eine schnelle Variation des Farbspektrums erfordern. Die optische Vorrichtung weist neben der Beleuchtungsvorrichtung wenigstens ein weiteres optisches Bauelement auf, das im Strahlengang der von der Beleuchtungsvorrichtung abgegebenen Strahlung angeordnet ist.

Insbesondere kann die Beleuchtungsvorrichtung für digitale Projektionssysteme verwendet werden. In diesem Fall kann ein besonders umfangreicher Farbraum abgedeckt werden.

Die Beleuchtungsvorrichtung wird zur Untersuchung von Proben eingesetzt. Gegenstand der vorliegenden Erfindung ist daher auch eine optische Vorrichtung zur Untersuchung einer Probe, insbesondere ein Weitfeldmikroskop oder ein Fluoreszenz-Reader, mit einer erfindungsgemäßen Beleuchtungsvorrichtung. Eine solche Untersuchungsvorrichtung zeichnet sich dadurch aus, daß sie bedingt durch die Ausbildung der Beleuchtungsvorrichtung nur wenige oder keine beweglichen Teile aufweist und damit kostengünstig und einfach herstellbar ist. Darüber hinaus kann sie sehr kompakt aufgebaut werden.

Die Vorrichtung ist zur Durchführung von Fluoreszenzuntersuchungen an einer Probe ausgebildet und weist dazu wenigstens einen Multiband-Emissionsfilter oder -filtersatz in einem Detektionsstrahlengang für von der Probe ausgehende Fluoreszenzstrahlung auf. Im folgenden wird der Einfachheit halber auch ein Multiband-Emissionsfiltersatz als Multiband-Emissionsfilter bezeichnet. Der Multiband-Emissionsfilter kann insbesondere als Emissionsfilter für erzeugte Fluoreszenzstrahlung dienen. So aufgebaute Vorrichtungen zur Durchführung von Fluoreszenzuntersuchungen haben, insbesondere wenn die Halbleiterstrahlungsquellen auch gleichzeitig betrieben werden können, wesentliche Vorteile gegenüber bekannten Fluoreszenzuntersuchungsvorrichtungen. So ist bei einem kombinierten Betrieb von wenigstens zweien der Halbleiterstrahlungsquellen eine simultane Detektion mehrerer Fluoreszenzfarbstoffe in der Probe möglich, was die Untersuchung von Proben, insbesondere bei Reihenuntersuchungen, wesentlich beschleunigt. Darüber hinaus kann durch das Umschalten zwischen verschiedenen Halbleiterstrahlungsquellen ein Wechsel der Emissionsfilter und ein dabei gegebenenfalls auftretender Bildversatz, der an sich durch mechanischen Filterwechsel entsteht, einfach vermieden werden. Weiter kann durch das schnelle Umschalten zwischen den verschiedenen Halbleiterstrahlungsquellen die Strahlenbelastung einer Probe bei der Untersuchung verringert werden. Der Multiband-Emissionsfilter ist dabei vorzugsweise so ausgebildet, daß in Kombination mit einer entsprechenden Wahl der Anregungs- bzw. Emissionsspektren der Beleuchtungsvorrichtung Fluoreszenzuntersuchungen von wenigstens zwei, bevorzugt drei bis vier Fluoreszenzfarbstoffen einer Probe möglich sind. Dazu sind insbesondere die Anregungsspektren auf die Fluoreszenzfarbstoffe abzustimmen.

Um ein besonders hohes Signal-Rausch-Verhältnis zu erhalten, weist die Vorrichtung in dem Beleuchtungsstrahlengang vorzugsweise einen Multiband-Anregungsfilter auf. Durch diesen können die Anregungsspektren sehr scharf definiert werden. Darüber hinaus ist vorzugsweise ein Multiband-Farbteiler vorgesehen, mittels dessen die von der Beleuchtungsvorrichtung abgegebene Beleuchtungs- bzw. Anregungsstrahlung in dem Beleuchtungs- und/oder Abbildungsstrahlengang der Untersuchungsvorrichtung eingekoppelt werden kann. Diese Ausführungsform hat ebenfalls den Vorteil, daß ein besonders gutes Signal-Rausch-Verhältnis erhalten wird, da der Multiband-Farbteiler ebenfalls als Filter wirkt. Die Bänder sind auch hier vorzugsweise den Anregungs- und Fluoreszenzspektren der verwendeten Fluoreszenzfarbstoffe angepaßt.

Besonders bevorzugt ist der Multiband-Emissionsfilter in einem Filterwürfel enthalten, der weiter einen im Beleuchtungsstrahlengang der Untersuchungsvorrichtung angeordneten Multiband-Anregungsfilter oder -filtersatz und einen Multiband-Farbteiler zur Umlenkung der Beleuchtungsstrahlung der Beleuchtungsvorrichtung oder von der Probe ausgehender Fluoreszenzstrahlung aufweist. Dies hat den Vorteil, daß eine sehr kompakte Bauform erreicht und eine Ausrichtung der optischen Bauelemente aufeinander stark vereinfacht werden.

Vorzugsweise liegt bei der Fluoreszenz-Untersuchungsvorrichtung wenigstens eines der Emissionsspektren der Beleuchtungsvorrichtung mit seiner charakteristischen Wellenlänge zwischen zwei Emissionswellenlängenbereichen des Multiband-Emissionsfilters. Dies hat den Vorteil, daß durch die Anregungsstrahlung, d.h. die Emissionsstrahlung der Halbleiterstrahlungsquellen der Beleuchtungsvorrichtung allenfalls wenig optische Strahlung die Detektion der Fluoreszenzstrahlung beeinträchtigen kann. Vorzugsweise alternieren bei der Vorrichtung die Schwerpunkte der Emissionsspektren der Beleuchtungsvorrichtung mit den Emissionswellenlängenbereichen der Emissionsfilter. Unter der charakteristischen Emissionswellenlänge kann dabei insbesondere eine Wellenlänge, bei der das Emissionsspektrum ein Maximum aufweist, oder eine Schwerpunktwellenlänge, die sich als mit der Emissionsintensität gewichteter Mittelwert der Emissionswellenlängen ergibt, oder die dominante Wellenlänge verstanden werden.

Vorzugsweise weist die Vorrichtung wenigstens zwei Multiband-Filter auf, deren Filterkanten um einen Abstand zwischen 10 nm und 90 nm relativ zueinander verschoben sind. Diese Ausführungsform hat den Vorteil, daß eine größere Anzahl von verschiedenen Fluoreszenzfarbstoffen zur Untersuchung verwendet werden kann.

Besonders bevorzugt weist die Untersuchungsvorrichtung dann eine Aufnahme für wenigstens zwei Filterwürfel auf, mittels derer jeweils einer der Filterwürfel in einen Detektionsstrahlengang der Vorrichtung bewegbar ist. Diese Ausführungsform hat den Vorteil, daß ein schneller Wechsel der Filterwürfel möglich ist, was insbesondere Reihenuntersuchungen von Proben, insbesondere bei Bio-Chip-Readern, stark beschleunigen kann. Die Aufnahme kann dabei als Schieber, Rad oder Revolver ausgebildet sein. Dabei kann die Bewegung der Aufnahme manuell oder durch einen elektrischen Antrieb bewegt werden. Eine entsprechend größere Anzahl der Halbleiterstrahlungsquellen mit jeweils unterschiedlichen Emissionsspektren ist nicht unbedingt notwendig.

Die Untersuchungsvorrichtung kann, bevorzugt als Weitfeldmikroskop ausgebildet sein. Dabei kann das Mikroskop insbesondere auch als inverses Mikroskop ausgelegt sein.

Gegenstand der vorliegenden Erfindung ist auch ein Verfahren gemäß Anspruch 16.

Die Erfindung wird im folgenden noch näher anhand der Zeichnungen erläutert. Es zeigen:
- Fig. 1: eine schematische Darstellung einer Fluoreszenzuntersuchungsvorrichtung in Form eines Weitfeld-Fluoreszenzmikroskops,
- Fig. 2: eine schematische Darstellung der Emissionsspektren der Halbleiterstrahlungsquellen der Beleuchtungsvorrichtung in Fig. 1, des Transmissionsverhaltens der Anregungsbandfilter der Beleuchtungsvorrichtung in Fig. 1, und des Transmissionsverhaltens der Multiband-Farbfilter für die Fluoreszenzstrahlung der Untersuchungsvorrichtung in Fig. 1,
- Fig. 3: eine nicht erfindungsgemäße Ausführung der Beleuchtungsvorrichtung
- Fig. 4: eine schematische Darstellung der Emissionsspektren der Halbleiterstrahlungsquellen und des spektralen Transmissionsverhaltens der Farbteiler der Beleuchtungsvorrichtung in Fig. 3,
- Fig. 5: eine Beleuchtungsvorrichtung nach einer bevorzugten Ausführungsform der Erfindung,
- Fig. 6: eine schematische Darstellung der Emissionsspektren der Halbleiterstrahlungsquellen und des spektralen Transmissionsverhaltens der Farbteiler der Beleuchtungsvorrichtung in Fig. 5,
- Fig. 7: eine Beleuchtungsvorrichtung nach einer bevorzugten Ausführungsform der Erfindung,
- Fig. 8: eine schematische Darstellung der Emissionsspektren der Halbleiterstrahlungsquellen und des spektralen Transmissionsverhaltens der Farbteiler der Beleuchtungsvorrichtung in Fig. 7,
- Fig. 9: eine Beleuchtungsvorrichtung nach einer bevorzugten Ausführungsform der Erfindung,
- Fig. 10: eine schematische Darstellung der Emissionsspektren der Halbleiterstrahlungsquellen und des spektralen Transmissionsverhaltens der Farbteiler der Beleuchtungsvorrichtung in Fig. 9,
- Fig. 11: eine Beleuchtungsvorrichtung nach einer bevorzugten Ausführungsform der Erfindung,
- Fig. 12a, b und c: schematische Darstellungen von Halbleiterstrahlungsquellen und verschiedenen Ausführungsformen von davor angeordneten Kollimationseinrichtungen für Beleuchtungsvorrichtungen nach weiteren bevorzugten Ausführungsformen der Erfindung, und
- Fig. 13: eine schematische Darstellung einer nicht erfindungsgemäßen Untersuchungsvorrichtung.

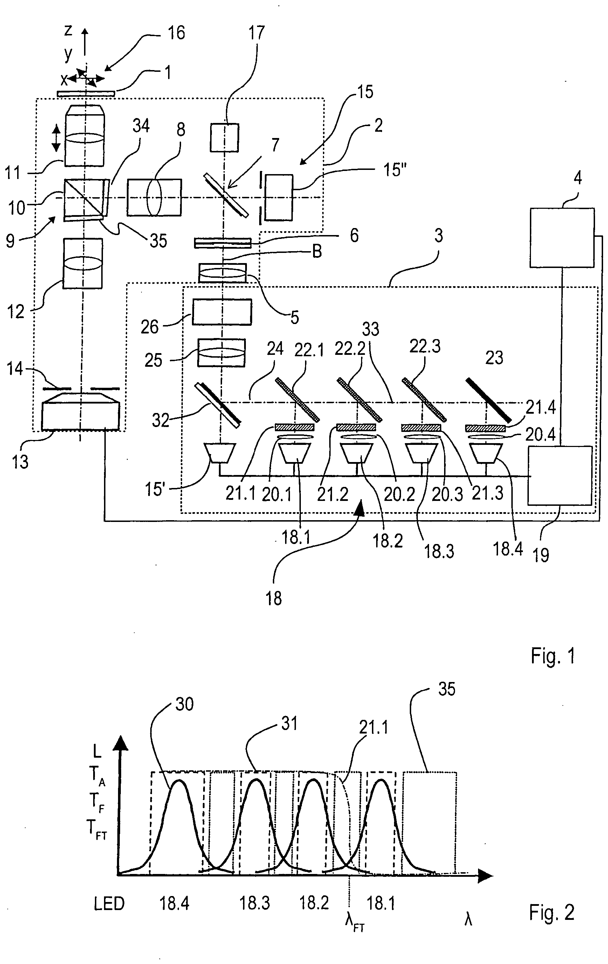

In Fig. 1 verfügt eine Untersuchungsvorrichtung in Form eines Fluoreszenz-Mikroskops zur Untersuchung einer Probe 1 über einen Mikroskopteil 2, eine multispektrale Beleuchtungsvorrichtung 3 und eine Steuer- und Auswerteeinheit 4 zur Ansteuerung der Beleuchtungsvorrichtung 3 und Erfassung und Auswertung von durch den Mikroskopteil 2 erzeugten Bildern, genauer Fluoreszenzbildern, der Probe 1.

Die Beleuchtungsvorrichtung 3 gibt Beleuchtungsstrahlung in einen Beleuchtungsstrahlengang B des Mikroskopteils 2 ab, der durch eine Kollimationsoptik 5 zur Kollimation der von der Beleuchtungsvorrichtung 3 abgegebenen optischen Strahlung, eine dieser nachgeordnete Feldblende 6, einen teiltransparenten Umlenkspiegel 7, einen Beleuchtungstubus 8 mit einer Optik, einen Filterwürfel 9 mit einem Multiband-Farbteiler 10 und ein Objektiv 11 gebildet wird. Aus dem Beleuchtungsstrahlengang austretende Beleuchtungsstrahlung gelangt dann auf die Probe 1.

Die Probe 1 wird von dem Mikroskopteil 2 abgebildet. Dieser verfügt dazu über das Objektiv 11, den Filterwürfel 9 und einen Detektionstubus 12 mit einer Detektionsoptik, die zusammen einen Abbildungs- bzw. Detektionsstrahlengang bilden und die Probe 1 auf ein Kamera 13 mit Blende 14 abbilden. Der Filterwürfel 9 verfügt in dem Abbildungsstrahlengang über ein Mehrfachfarbfilter bzw. ein Multiband-Farbfilter 35, das für die zu detektierende Fluoreszenzstrahlung durchlässig ist, andere spektrale Anteile, insbesondere Anregungsstrahlung, jedoch ausfiltert. Die Kamera 13 ist über eine Signalverbindung mit der Steuer- und Auswerteeinheit 4 verbunden, so daß von der Kamera 13 erfaßte Bilder von der Steuer- und Auswerteeinheit 4 erfaßt werden können.

Zur Fokussierung des Bildes verfügt der Mikroskopteil 2 über eine Autofokusvorrichtung 15 mit einer Weißlicht-Leuchtdiode 15' und einem Autofokussensor 15" mit Blende. Die Autofokuseinrichtung steuert einen in Fig. 1 nicht explizit gezeigten z-Antrieb für das Objektiv 11 an, mittels dessen das Objektiv 11 zur Fokussierung entlang der optischen Achse des Objektivs 11, d.h. der z-Richtung, verschiebbar ist. Der genaue Aufbau und die genaue Funktion des Autofokussensors 15 sind in DE 103 19 182 A1 beschrieben.

Die Kamera 13 umfaßt ein CCD-Feld zum Empfang von Detektionsstrahlung und zur Erzeugung von Signalen, die die von einem Element des CCD-Feldes empfangene Energie und damit Graustufen wiedergeben.

Zur Auswahl eines abzubildenden Bereichs der Probe 1 dient ein in Fig. 1 nur durch zwei Doppelpfeile angedeuteter motorisch angetriebener Kreuztisch 16, mittels dessen die Probe 1 in einer x-y-Ebene orthogonal zu der z-Achse bewegbar ist. Der in Fig. 1 nicht gezeigte Antrieb des Kreuztischs 16 ist über eine ebenfalls nicht gezeigte Steuerverbindung mit der Steuer- und Auswerteeinrichtung 4 verbunden und über diese steuerbar.

Die Steuer- und Auswerteeinrichtung 4 umfaßt im Beispiel einen Personal Computer mit daran angeschlossenen üblichen Eingabe- und Ausgabegeräten, insbesondere einem in der Fig. 1 nicht dargestellten Monitor. Über eine graphische Benutzerschnittstelle der Steuer- und Auswerteeinrichtung 4 sind die Beleuchtungsvorrichtung 3 und der Mikroskopteil 2 ansteuerbar.

Ein ebenfalls mit der Steuer- und Auswerteeinheit 4 verbundener Monitor-Detektor 17 ist hinter dem teiltransparenten Umlenkspiegel 7 in der Verlängerung der optische Achse der Kollimationsoptik 5 angeordnet. Er empfängt einen durch die Transmission des Umlenkspiegels 7 festgelegten Anteil der von der Beleuchtungsvorrichtung 3 abgegebenen Beleuchtungsstrahlung und erzeugt Signale, die Energie bzw. Intensität der Beleuchtungsstrahlung wiedergeben. Die Steuer- und Auswerteeinrichtung 4 empfängt die Signale und ermittelt aus diesen die auf die Probe 1 auftreffende Intensität.

Die multispektrale Beleuchtungsvorrichtung 3 dient zur Abgabe optischer Strahlung in einem oder mehreren vorgegebenen Wellenlängenbereichen entsprechend Ansteuersignalen von der Steuer- und Auswerteeinheit 4.

Die multispektrale Beleuchtungsvorrichtung 3 verfügt dazu neben der Weißlicht-Leuchtdiode 15' über mehrere Halbleiterstrahlungsquellen 18, im Beispiel vier Leuchtdioden 18.1, 18.2, 18.3 und 18.4 mit jeweils unterschiedlichen Emissionswellenlängenbereichen, im Beispiel rot, grün, blau bzw. Ultraviolett, und eine Steuereinrichtung 19, die zur Ansteuerung bzw. Versorgung der Leuchtdioden mit Strom mit diesen verbunden ist. Den Leuchtdioden 18.1, 18.2, 18.3 und 18.4 sind in entsprechenden Strahlengangabschnitten jeweils Kollimationseinrichtungen 20.1, 20.2, 20.3 und 20.4, Anregungsbandfilter 21.1, 21.2, 21.3 und 21.4 sowie Farbteiler 22.1, 22.2, 22.3 bzw. ein Spiegel 23 nachgeordnet. Die Farbteiler 22.1, 22.2 und 22.3 koppeln die Strahlung der Halbleiterstrahlungsquellen 18.1 bis 18.3 sukzessive in einen Strahlengang von der Halbleiterstrahlungsquelle 18.4 und damit schließlich in einen gemeinsamen Beleuchtungsstrahlengangabschnitt 24 ein.

Im weiteren Verlauf des gemeinsamen Beleuchtungsstrahlengangabschnitts 24 sind ein nur der Umlenkung und der Einkopplung der Strahlung der Leuchtdiode 15' der Autofokuseinrichtung 15 in den gemeinsamen Beleuchtungsstrahlengangabschnitt 24 dienender teiltransparenter Umlenkspiegel 32, eine Optik 25 und eine Homogenisierungseinrichtung 26 in Form eines verspiegelten Hohlstabes, in die die Optik 25 das Licht aus dem gemeinsamen Beleuchtungsstrahlengangabschnitt 24 einkoppelt, vorgesehen. Die Homogenisierungseinrichtung 26 dient dazu, die Intensität der Beleuchtungsstrahlung in dem Beleuchtungsstrahlengangabschnitt 24 gleichmäßig über den Strahlquerschnitt der Beleuchtungsstrahlung zu verteilen, so daß über den Strahlquerschnitt eine im wesentlichen konstante Intensität erzielt wird.

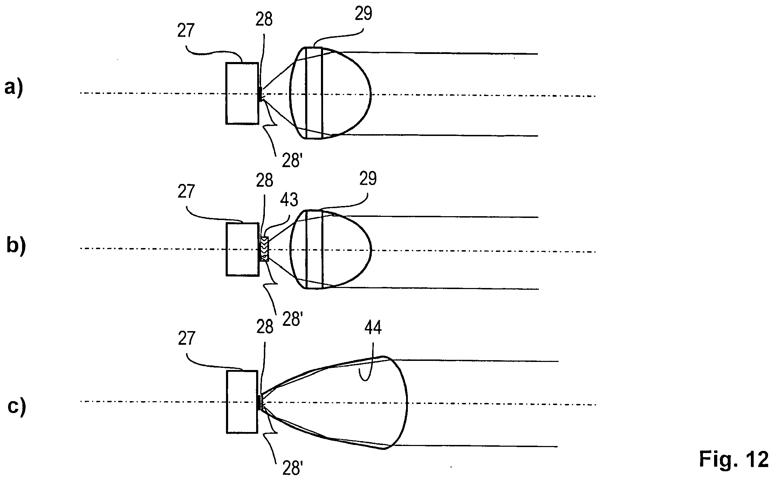

Die Leuchtdioden 18 verfügen jeweils über einen Träger und eine optische Strahlung emittierende Fläche. In Fig. 12a ist beispielhaft für die Leuchtdiode 18.1 der Träger 27 und der eigentliche Leuchtdioden-Chip 28 mit der strahlungsemittierenden Fläche 28' gezeigt.

Die Steuereinrichtung 19 ist so ausgebildet, daß sie auf Steuersignale der Steuer- und Auswerteeinheit 4 hin zum einen die Halbleiterstrahlungsquellen 18 einzeln oder in Kombination an- und ausschaltet und zum anderen durch Einstellung des Versorgungsstroms die Helligkeit der jeweiligen eingeschalteten Halbleiterstrahlungsquelle bzw. die Intensität der dieser abgegebenen optischen Strahlung einzeln steuert bzw. einstellt. Die dazu für jede der Halbleiterstrahlungsquellen vorgesehene Stromversorgung hat vorzugsweise Schaltzeiten im Sub-Millisekunden-Bereich, d.h. schneller als etwa 1 ms, so daß ein schnelles An- und Abschalten jeder der Halbleiterstrahlungsquellen möglich ist.

Im Strahlengang jeder der Halbleiterstrahlungsquellen 18.1 bis 18.4 sind die Kollimationseinrichtungen 20.1. bis 20.4 angeordnet, die von den Halbleiterstrahlungsquellen abgegebene optische Strahlung kollimieren. Im Beispiel werden als Kollimationseinrichtungen, wie in Fig. 12a genauer gezeigt, asphärische Linsen 29 hoher numerischer Apertur, vorzugsweise größer als 0,5, verwendet, die verglichen mit prinzipiell auch einsetzbaren sphärischen Linsen bessere Kollimationseigenschaften haben. Die Kollimationseinrichtungen 20 und die Optik 25 sind so ausgelegt und angeordnet, daß von jeder der Halbleiterstrahlungsquellen ein möglichst großer Anteil in die Homogenisierungseinrichtung 26 eingekoppelt wird. Insbesondere sind die Kollimationseinrichtungen und die Optik 25 im gemeinsamen Beleuchtungsstrahlengangabschnitt 24 vor der Homogenisierungseinrichtung 26 so ausgelegt, daß die Lichtleitwerte optimal aneinander angepaßt sind. Die durch die Kollimationseinrichtung und die Einkoppeloptik 25 für die Homogenisierungseinrichtung 26 gebildete Optik ist telezentrisch ausgelegt, so daß die Pupille der Kollimationseinrichtung 20 und die Pupille der Einkoppeloptik 25 zur Überlagerung gebracht werden.

Die Optik 25 mit einer dem benötigten Abbildungsmaßstab entsprechenden Brennweite fokussiert die optische Strahlung dazu in die Eingangsfläche der Homogenisierungseinrichtung 26. Da im vorliegenden Beispiel die Abstände der Halbleiterstrahlungsquellen 18 zu der Kollimationseinrichtung 26 jeweils unterschiedlich sind, sind die Kollimationseinrichtungen, im Beispiel die asphärischen Linsen 29, in Ausführung und/ oder Anordnung für jede der Halbleiterstrahlungsquellen 18 spezifisch angepaßt. In diesem Beispiel werden gleichartige asphärische Linsen verwendet, deren Lage zwischen dem jeweiligen Leuchtdioden-Chip und dem der Leuchtdiode im Strahlengang folgenden Farbteiler bzw. Spiegel entsprechend optimiert ist. Bei einem alternativen Ausführungsbeispiel können für jede der Halbleiterstrahlungsquellen entsprechend deren Lage im Strahlengang spezifisch angepaßte asphärische Linsen als Kollimationseinrichtungen verwendet werden.

Wie bereits erwähnt, emittieren die Halbleiterstrahlungsquellen 18.1, 18.2, 18.3 und 18.4 optische Strahlung mit jeweils verschiedenen Emissionsspektren, die schematisch in Fig. 2 gezeigt sind. In Fig. 2 sind in dem gleichen Diagramm als Funktion der Wellenlänge λ qualitativ die Emissionsstrahlungsleistung L der Halbleiterstrahlungsquellen 18 (durchgezogene Linien), die Transmission T_{A} der Anregungsbandfilter 21.1 bis 21. 4 (gestrichelte Linien), die Transmission T_{F} des Mehrfachfarbfilters 35 (punktierte Linie) und die Transmission T_{FT} des Farbteilers 22.1 dargestellt. Die jeweiligen Emissionsspektren 30.1 bis 30.4 der Halbleiterstrahlungsquellen 18.1 bis 18.4 weisen jeweils einen Peak auf. Die charakteristische Emissionswellenlänge des jeweiligen Emissionsspektrums ist in diesem Ausführungsbeispiel wie auch den folgenden Ausführungsbeispielen die Wellenlänge mit der maximalen Emissionsintensität. In einer anderen Variante kann auch die Schwerpunktwellenlänge, d.h. der mit der Emissionsintensität gewichtete Mittelwert der Emissionswellenlängen, als charakteristische Emissionswellenlänge verwendet werden. Die Leuchtdioden 18.1 bis 18.4 emittieren daher, ausgedrückt durch die Farbe der charakteristischen Emissionswellenlänge, optische Strahlung in Spektren mit absteigender charakteristischen Wellenlänge: Die Leuchtdiode 18.1 im Roten, die Leuchtdiode 18.2 im Grünen, die Leuchtdiode 18.3 im Blauen und die Leuchtdiode 18.4 im Ultravioletten. Die Leuchtdioden sind dabei so gewählt, daß sich die Emissionsspektren gut zur Anregung von wenigstens vier vorgegebenen Fluoreszenzfarbstoffen verteilt über das optische Spektrum vom UV bis zum roten Licht eignen.

Die als Interferenzfilter ausgebildeten Anregungsbandfilter 21.1 bis 21.4 mit an die Emissionsspektren der Halbleiterstrahlungsquellen jeweils angepaßten Transmissionsbändern 31.1 bis 31.4 engen die spektrale Breite der Emissionsspektren 30.1 bis 30.4 ein und verhindern so ein Übersprechen bei verschiedenen gleichzeitigen Fluoreszenzuntersuchungen für verschiedene Fluoreszenzfarbstoffe.

Während der Spiegel 23 nur der Umlenkung der von der Leuchtdiode 18.1 abgegebenen Strahlung dient und daher nur ein möglichst hohes Reflexionsvermögen im Bereich des Emissionsspektrums der Leuchtdiode 18.4 aufweist, haben die den Halbleiterstrahlungsquellen 18.1 bis 18.3 jeweils zugeordneten Farbteiler 22.1 bis 22.3 eine entsprechend der Anordnung im Strahlengang und der Anordnung der Leuchtdioden gewählte Transmission. Sie weisen in dem durch die Emissionsspektren der Leuchtdioden 18.1 bis 18.4 aufgespannten Wellenlängenbereich ein stufenförmiges Transmissionsvermögen auf, bei dem die Transmission für Wellenlängen unterhalb einer die Lage der Stufe wiedergebenden Flankenwellenlänge λ_{FT} sehr hoch, darüber jedoch die Reflexion sehr hoch, idealerweise nahezu 100%, ist. Diese Form ist in Fig. 2 schematisch für den Farbteiler 22.1 gezeigt.

Entlang des Strahlengangs von dem Spiegel 23 bzw. der Halbleiterstrahlungsquelle 18.4 zu der Homogenisierungseinrichtung 26 sind die anderen Halbleiterstrahlungsquellen 18.1 bis 18.3 daher in einer Reihenfolge abnehmender charakteristischen Emissionswellenlängen und die diesen zugeordneten Farbteiler 22.1 bis 22.3 in einer entsprechenden Reihenfolge monoton abnehmender Flankenwellenlängen angeordnet.

Die Flankenwellenlängen sind dabei so gewählt, daß optische Strahlung von einer dem jeweiligen Farbteiler zugeordneten Halbleiterstrahlungsquelle reflektiert und damit in den Strahlengang 33 von der Halbleiterstrahlungsquelle 18.4 mit der niedrigsten charakteristischen Emissionswellenlänge zu der Homogenisierungseinrichtung 26 eingekoppelt wird, Strahlung der anderen Leuchtdioden, deren Strahlung in den Strahlengang 33 in Richtung der Halbleiterstrahlungsquelle größter charakteristischen Emissionswellenlänge bereits eingekoppelt ist, jedoch durchlassen. Die Flankenwellenlängen sind insbesondere so gewählt, daß sie in der Mitte zwischen den charakteristischen Emissionswellenlängen der Halbleiterstrahlungsquellen 18 liegen.

Die von der Beleuchtungsvorrichtung 3 abgegebene optische Anregungsstrahlung wird nach Passieren der Kollimationsoptik 5 und der Feldblende 6 von dem Umlenkspiegel 7 in den Beleuchtungstubus 8 eingekoppelt. Aus dem Beleuchtungstubus 8 austretende Anregungsstrahlung gelangt dann zu dem Filterwürfel 9, das einen Multiband-Anregungsfilter 34 vor dem Multiband-Farbteiler 10 umfaßt, der gegebenenfalls noch in der Anregungsstrahlung enthaltene Anteile in unerwünschten Wellenlängenbereichen herausfiltert. In einer Variante des Ausführungsbeispiels kann bei Verwendung eines sogenannten Pinkel-Filtersatzes der Filter 34 entfallen. Ein Pinkel-Filtersatz ist ein von Prof. Dan Pinkel vorgeschlagener Filtersatz, der beispielsweise für FISH-Mikroskopie (Fluoreszenz-in-situ-Hybridisierungs-Mikroskopie) verwendet werden kann.

Nach Umlenkung durch den Multiband-Farbteiler 10, der für die Anregungsstrahlung wenigstens teilweise reflektiv ist, wird die Anregungsstrahlung durch das Objektiv 11 auf die Probe 1 fokussiert und regt dort bei Vorhandensein entsprechender Fluoreszenzfarbstoffe für die jeweiligen Fluoreszenzfarbstoffe charakteristische Fluoreszenzstrahlung an.

Von der Probe 1 ausgehende Detektionsstrahlung, die insbesondere die angeregte Fluoreszenzstrahlung umfaßt, wird durch das Objektiv 11 parallelisiert und gelangt zu dem Multiband-Farbteiler 10, der so ausgelegt ist, daß optische Strahlung in Wellenlängenbereichen, in denen die Fluoreszenzstrahlung der vorgegebenen Fluoreszenzfarbstoffe liegt, durchgelassen, andere Strahlung jedoch umgelenkt wird. Die durchgelassene Detektionsstrahlung wird dann nochmals durch das Mehrfachfarb- bzw. Emissionfilter 35 gefiltert, das in schmalen Wellenlängenbereichen um die Wellenlängen der erwarteten von den vorgegebenen Fluoreszenzfarbstoffen abgegebenen Fluoreszenzstrahlung herum transmissiv ist, nicht jedoch für Strahlung mit Wellenlängen zwischen diesen Bereichen. Die Transmission eines solchen auf die Beleuchtungsvorrichtung 3 abgestimmten Mehrfachfarbfilters 35 ist beispielhaft und schematisch in Fig. 2 als gepunktete Linie gezeigt.

Die verbleibende Strahlung wird von einer Detektionsoptik in dem Detektionstubus 12 auf die Kamera 13 mit Blende 14 abgebildet, wo das entstehende Bild detektiert wird. Die entstehenden Detektionssignale werden dann von der Steuer- und Auswerteeinheit 4 erfaßt, wodurch insgesamt ein Bild der Verteilung und Konzentration der vorgegebenen Fluoreszenzfarbstoffe in der Probe 1 erfaßt wird.
Zur Erzeugung der Bilder können die Halbleiterstrahlungsquellen 18 nacheinander oder in Kombination eingeschaltet werden, wobei die Intensität der jeweils abgegebenen optischen Strahlung von der Steuereinheit 19 geregelt werden kann. Dies ist insbesondere dann vorteilhaft, wenn statt der Kamera 13 ein Okular für den Direkteinblick verwendet wird.

Die folgenden vier Beispiele einer Untersuchungsvorrichtung unterscheiden sich von der Untersuchungsvorrichtung dieses Beispiels durch die Ausbildung der Beleuchtungsvorrichtung 3. Statt der Beleuchtungsvorrichtung 3 werden bevorzugte Ausführungsformen von Beleuchtungsvorrichtungen gemäß der Erfindung verwendet. Auf die Autofokusvorrichtung wird verzichtet. Alle anderen Teile sind, bis auf die Abstimmung auf die geänderte Beleuchtungsvorrichtung, unverändert, so daß die Ausführungen zu dem Beispiel der Figur 1 entsprechend auch hier gelten. Auch bei der Beleuchtungsvorrichtung werden für einige Komponenten, die denen des Beispiels der Figur entsprechen, gleiche Bezugszeichen verwendet.

In den Figuren ist jeweils die Steuereinheit für die Halbleiterstrahlungsquellen nicht gezeigt, sie unterscheidet sich von der des Beispiels der Figur 1 nur darin, daß sie zur Ansteuerung von fünf Halbleiterstrahlungsquellen ausgebildet ist, wobei die Ansteuerung der einzelnen Halbleiterstrahlungsquellen wie im Beispiel der Figur 1 erfolgen kann.

Bezüglich der Ausbildung und Anordnung der Kollimationseinrichtungen 21, der Einkoppeloptik 25 und der Homogenisierungseinrichtung gilt das für das Beispiel der Figur 1 gesagte entsprechend auch hier.

Die Beleuchtungsvorrichtungen verfügen jeweils statt über vier über fünf Halbleiterstrahlungsquellen, deren charakteristische Emissionswellenlängen der Emissionsspektren verschieden sind und über den Spektralbereich vom UV bis zum roten Ende des sichtbaren Spektrums verteilt sind. Insbesondere ist eine der Halbleiterstrahlungsquellen eine Strahlungsquelle für optische Strahlung im UV-Bereich.

Die Halbleiterstrahlungsquellen unterscheiden sich zwischen den folgenden Ausführungsbeispielen nicht. Sie werden daher in den Ausführungsbeispielen mit den gleichen Bezugszeichen 36 bezeichnet. Sie können beispielsweise in Form von Leuchtdioden folgendermaßen gewählt sein. Bezeichnen die Zahlen 36.1 bis 36.5 die jeweilige Halbleiterstrahlungsquelle in einem Ausführungsbeispiel, so können beispielsweise die Leuchtdiode 36.1 Strahlung mit einer charakteristischen Emissionswellenlänge im IR oder roten Bereich des optischen Spektrums, Leuchtdiode 36.2 Strahlung mit einer charakteristischen Emissionswellenlänge im gelben Bereich des Spektrums, Leuchtdiode 36.3 Strahlung mit einer charakteristischen Emissionswellenlänge im grünen Bereich des Spektrums, Leuchtdiode 36.4 Strahlung mit einer charakteristischen Emissionswellenlänge im blauen Bereich des Spektrums und Leuchtdiode 36.5 Strahlung mit einer charakteristischen Emissionswellenlänge im UV-Bereich abgeben.

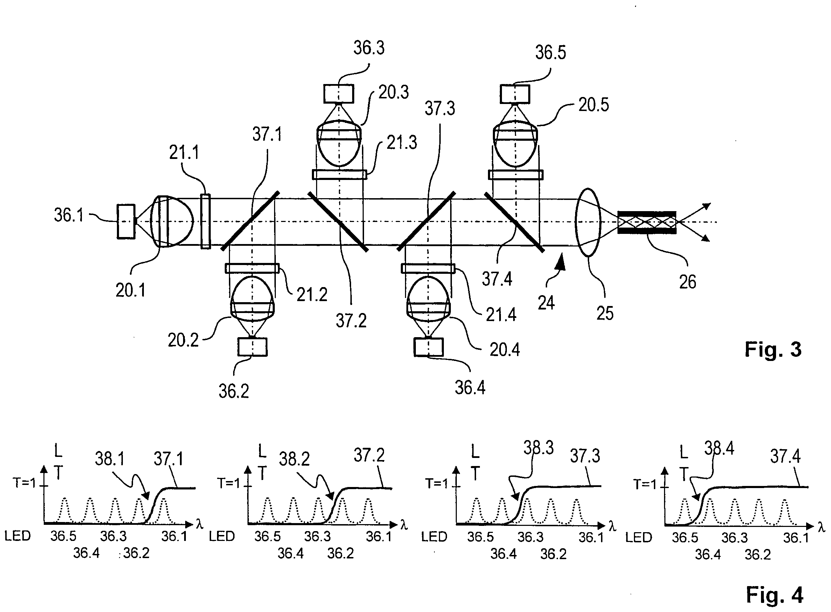

Bei der ersten der vier Beispiele die schematisch in Fig. 3 gezeigt ist, wird die optische Strahlung der Halbleiterstrahlungsquellen 36.1 bis 36.5 in Richtung von der Strahlungsquelle 36.1 zu der Homogenisierungseinrichtung 26 sukzessive mittels vier entsprechender Farbteiler 37.1 bis 37.4 in einen, im Beispiel linearen, Strahlengang von der Strahlungsquelle 36.1 bis nach dem Farbteiler 3.4 eingekoppelt, dessen Ende den gemeinsamen Beleuchtungsstrahlengangabschnitt 24 bildet.

Die vier Farbteiler 37.1 bis 37.4 weisen wie im Beispiel der Figur 1 eine stufenförmige Transmission im optischen Wellenlängenbereich auf. Dies ist in Fig. 4 veranschaulicht, die für die vier Farbteiler jeweils die Transmission des jeweiligen Farbteilers als Funktion der Wellenlänge λ als durchgezogene Linie und die Emissionsspektren der Leuchtdioden 36.1 bis 36.5, d.h. deren Intensität als Funktion der Wellenlänge, als gestrichelte bzw. gepunktete Linien zeigen.

Während die Strahlung der Leuchtdiode 36.1 nicht abgelenkt wird, sind die Leuchtdioden 36.2 bis 36.5 nacheinander entlang des Strahlengangs der Leuchtdiode 36.1 in einer Reihenfolge abnehmender Wellenlänge angeordnet, wobei die Farbteiler 37.1 bis 37.4 um 45° gegenüber dem von der Leuchtdiode 36.1 ausgehenden linearen Strahlengang geneigt angeordnet sind, um die Strahlung der Leuchtdioden 36.2 bis 36.5 in den gemeinsamen Beleuchtungsstrahlengangabschnitt 24 einzukoppeln.

Auch hier sind zwischen den Leuchtdioden und den im Strahlengang folgenden am nächsten liegenden Farbteilern 37.1 bis 37.4 jeweils eine Kollimationseinrichtung 20.1 bis 20.5 und zwischen den Kollimationseinrichtungen und den Farbteilern Anregungsfilter 21.1 bis 21.5 angeordnet, die bis auf die Abstimmung auf die Schwerpunktwellenlängen der Leuchtdioden 36.1 bis 36.5 wie im ersten Ausführungsbeispiel ausgebildet sind.

Die Strahlung aus dem gemeinsamen Beleuchtungsstrahlengangabschnitt 24 gelangt nun direkt in die analog zu dem ersten Ausführung ausgebildete Optik 25, die das Beleuchtungsstrahlenbündel auf die Eintrittsfläche der Homogenisierungseinrichtung 26, die ebenfalls wie im ersten Ausführungsbeispiel ausgebildet ist, lenkt.

In Fig. 4 sind für jeden der Farbteiler die Emissionsspektren der Leuchtdioden durch gepunktete Linien und die Transmission des jeweiligen Farbteilers als durchgezogene, mit dem Bezugszeichen des Farbteilers markierte Linie dargestellt. Wie Fig. 4 zu entnehmen, sind die Filterkanten bzw. -flanken 38.1 bis 38.4 der Farbteiler entlang des von der Leuchtdiode 36.1 ausgehenden Strahlengangs in Beleuchtungsrichtung als Funktion der Wellenlänge wie die von der Strahlungsquelle 36.1 zu der Homogenisierungseinrichtung 26 der Leuchtdioden 36 monoton fallend angeordnet, so daß Strahlung der vorhergehenden Leuchtdioden jeweils durchgelassen, Strahlung der nächsten Leuchtdioden jedoch abgelenkt und in den gemeinsamen Strahlengang eingekoppelt wird. Im Idealfall ist die Transmission der Farbteiler im beabsichtigten Durchlaßbereich 100% (T=1) und die Reflektivität unter 45° im gleichen Bereich 0% (R=0), und umgekehrt. Das heißt: T+R=1.

Die Multibandfilter des Filterwürfels 9 und der Multibandfarbteiler 35 sind analog zum ersten Ausführungsspiel, nun aber für die optische Strahlung der fünf Leuchtdioden ausgebildet.

Dieses Beispiel ist insbesondere dann vorteilhaft, wenn die Strahlung der Halbleiterstrahlungsquelle mit der kleinsten charakteristischen Emissionswellenlänge, d.h. im Beispiel Leuchtdiode 36. 5, mit besonders hoher Effizienz in die Homogenisierungseinrichtung 26 eingekoppelt werden soll. Der Grund hierfür ist der geringe Abstand dieser Halbleiterstrahlungsquelle zu der Homogenisierungseinrichtung 26. Da Hochleistungs-Leuchtdioden die Strahlung mit einem großen Winkelspektrum abgeben, läßt sich die Strahlung selbst mit einer gut angepaßten asphärischen Linse nur näherungsweise kollimieren (parallelisieren). Dadurch hängen die Verluste deutlich von der Weglänge ab, die die kollimierte Strahlung zurücklegen muß.

Die Leuchtdioden können auch in umgekehrter Reihenfolge, d.h. in einer Reihenfolge monoton steigernder Schwerpunktwellenlänge angeordnet sein, so daß die Leuchtdiode 36.5 die größte Wellenlänge aufweist. In diesem Fall sind die Farbteiler in ihrem Transmissionsvermögen zu invertieren, d.h. Transmissions- und Reflexionsbereich werden vertauscht. Das bedeutet, daß die Farbteiler in einer Reihenfolge monoton steigender Flankenwellenlängen entlang der Beleuchtungsrichtung angeordnet sind.

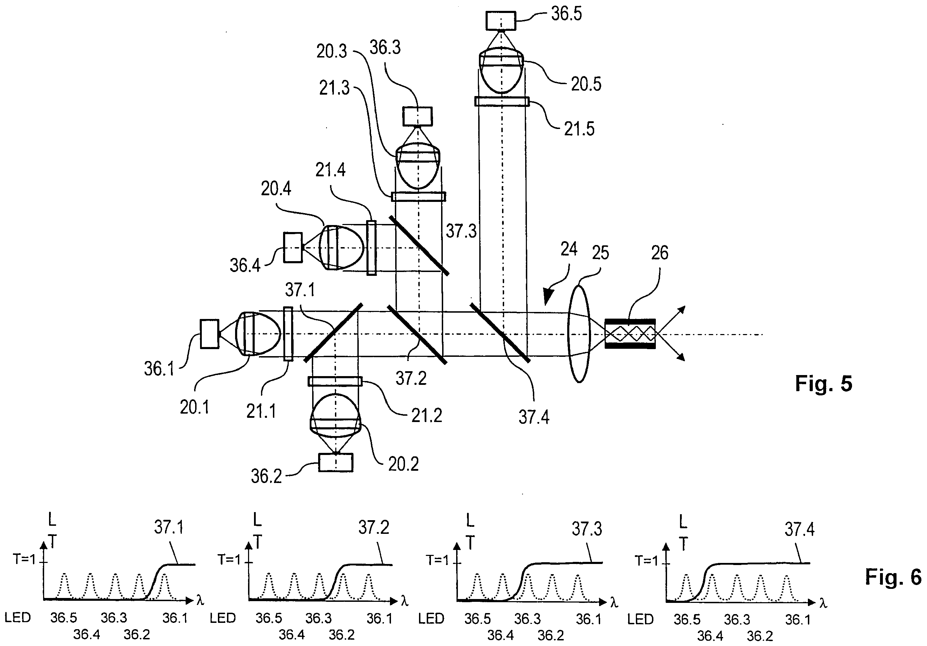

Fig. 5 zeigt ein Ausführungsbeispiel, das sich von dem vorhergehenden Beispiel nur durch die Anordnung der Halbleiterstrahlungsquellen mit den Kollimationseinrichtung und den Anregungsfiltern sowie den Farbteilern unterscheidet. Die Anordnungen aus Halbleiterstrahlungsquelle und der jeweils zugeordneten Kollimationseinrichtung, dem zugeordneten Anregungsfilter und dem Farbteiler ist gegenüber dem vorhergehenden Beispiel im wesentlichen bis gegebenenfalls auf die Abstände der Kollimationseinrichtung zu der Halbleiterstrahlungsquelle unverändert. Es werden daher die gleichen Bezugszeichen wie im vorhergehenden Beispiel verwendet. Insbesondere sind die Transmissionseigenschaften der Farbteiler 37 gegenüber dem vorhergehenden Beispiel unverändert.

In diesem Ausführungsbeispiel sind die Halbleiterstrahlungsquellen und die Farbteiler so angeordnet, daß alle Halbleiterstrahlungsquellen den gleichen Abstand zum letzten Farbteiler 37.4 haben.
Dazu sind die Strahlengänge von den Halbleiterstrahlungsquellen zu dem gemeinsamen Beleuchtungsstrahlengangabschnitt 24 so ausgebildet, daß die Strahlengangabschnitte von zwei Halbleiterstrahlungsquellen 36.3 und 36.4 mittels des Farbteilers 37.3 in einen gemeinsamen Strahlengangabschnitt eingekoppelt werden, der wiederum mittels des Farbteilers 37.2 mit einem von der Halbleiterstrahlungsquelle 36.1 ohne Ablenkung zu dem gemeinsamen Beleuchtungsstrahlengang 24 führenden gekoppelt ist. Die Strahlung der verbleibenden beiden Halbleiterstrahlungsquellen 36.2 und 36.5 wird über entsprechende Farbteiler 37.1 und 37.4 vor bzw. hinter dem Farbteiler 37.2 in den gemeinsamen Beleuchtungsstrahlengangabschnitt 24 gekoppelt.
Die Transmission der Farbteiler ist in der zu Fig. 4 analogen Darstellung in Fig. 6 gezeigt. Darin sind für jeden der Farbteiler die Emissionsspektren der Leuchtdioden durch gepunktete Linien und die Transmission des jeweiligen Farbteilers als durchgezogene, mit dem Bezugszeichen des Farbteilers markierte Linie dargestellt. Die Flankenwellenlängen der Farbteiler mit Stufencharakteristik liegt jeweils unterhalb des Emissionsbereichs der zugeordneten Leuchtdiode, aber oberhalb der Emissionsbereiche der Leuchtdioden mit Emissionsbereichen kürzerer Wellenlängen.

Wie in den vorhergehenden Beispielen ist zwischen den den Halbleiterstrahlungsquellen 36 jeweils im Strahlengang folgenden Kollimationseinrichtungen und den im Strahlengang nächsten Farbteilern jeweils die Anregungsfilter angeordnet.
Dieses Ausführungsbeispiel erfüllt grundsätzlich die gleiche Funktion wie das vorhergehende Beispiel. Die Anordnung ist jedoch so gewählt ist, daß alle Halbleiterstrahlungsquellen den gleichen Abstand zum letzten Farbteiler bzw. zu der Homogenisierungseinrichtung 26 aufweisen. Dadurch können alle Halbleiterstrahlungsquellen hinsichtlich der Kollimationsoptik 5 gleich behandelt werden, was die praktische Anwendung erleichtert. Wird die Halbleiterstrahlungsquelle 36.5 näher an den Farbteiler 37.4 herangerückt, so haben die Halbleiterstrahlungsquellen 36 im Mittel einen sehr geringen Abstand zu der lungsquellen 36 im Mittel einen sehr geringen Abstand zu der Homogenisierungseinrichtung 26, was die Effizienz erhöht und zu einer kompakten Bauweise beiträgt.

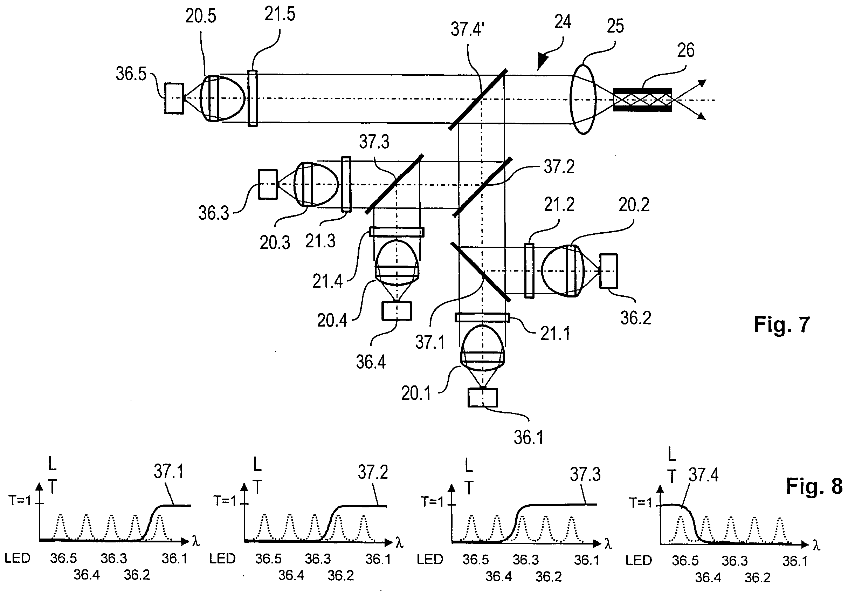

Fig. 7 zeigt ein Ausführungsbeispiel für die Beleuchtungsvorrichtung in der Untersuchungsvorrichtung gemäß der Erfindung, das sich von dem vorhergehenden Ausführungsbeispiel nur in der Anordnung der Halbleiterstrahlungsquellen 36 und der Farbteiler 37 unterscheidet. Darüber hinaus ist der Farbteiler 37.4 durch einen Farbteiler 37.4' ersetzt. Für gleiche Elemente werden daher die gleichen Bezugszeichen verwendet und die Ausführungen zu diesen für das vorhergehende Ausführungsbeispiel gilt auch hier. Wie in den vorhergehenden Ausführungsbeispielen ist zwischen den den Halbleiterstrahlungsquellen 36 jeweils im Strahlengang folgenden Kollimationseinrichtungen 20 und den im Strahlengang nächsten Farbteilern 37 jeweils die Anregungsfilter angeordnet. Darüber hinaus sind die Halbleiterstrahlungsquellen und die Farbteiler auch so angeordnet, daß alle Halbleiterstrahlungsquellen den gleichen Abstand zum letzten Farbteiler 37.4' haben.

In diesem Ausführungsbeispiel bilden die Farbteiler 37 Knoten in einem Baum, dessen Äste Strahlengangabschnitte von den Halbleiterstrahlungsquellen 36 zu den Farbteilern 37 bzw. zwischen den Farbteilern 37 sind. Dabei ist der Strahlengang der Halbleiterstrahlungsquelle 36.5 im wesentlichen linear.

Die Transmission der Farbteiler ist in der zu Fig. 4 analogen Darstellung in Fig. 8 gezeigt. Darin sind für jeden der Farbteiler die Emissionsspektren der Leuchtdioden durch gepunktete Linien und die Transmission des jeweiligen Farbteilers als durchgezogene, mit dem Bezugszeichen des Farbteilers markierte Linie dargestellt. Wie in Fig. 8 veranschaulicht, hat der Farbteiler 37.4' gegenüber dem Farbteiler 37.4 die invertierte Funktion und wird hier für die Halbleiterstrahlungsquelle 36.5 in Transmission verwendet. Diese Variante zeigt exemplarisch die Variationsmöglichkeiten für die Wahl der Farbteiler auf.
Die Strahlengänge der anderen Halbleiterstrahlungsquellen 36.1 und 36.2 bzw. 36.3 und 36.4 sind über die Farbteiler 37.1 bzw. 37.2 mit ersten Strahlengangabschnitten gekoppelt, die wiederum mittels des Farbteilers 37.3 gekoppelt und auf den Farbteiler 37.4 gelenkt werden.

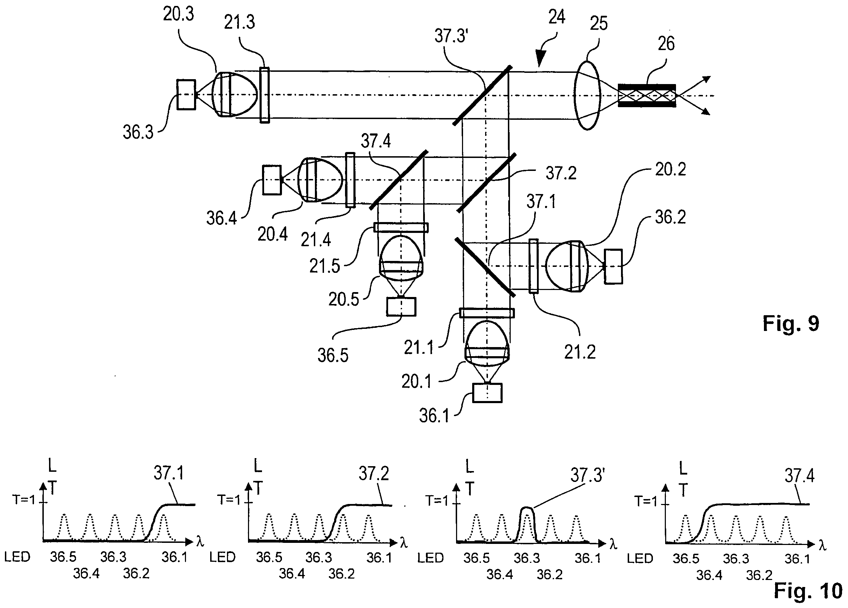

Eine in Fig. 9 veranschaulichte bevorzugte Ausführungsform der Beleuchtungsvorrichtung und damit der Abbildungseinrichtung nach der Erfindung unterscheidet sich von dem vorhergehenden Ausführungsbeispiel durch die Anordnung der Halbleiterstrahlungsquellen und der zugehörigen Farbteiler sowie der Charakteristik einiger der Farbteiler. Für alle Komponenten werden daher die gleichen Bezugszeichen verwendet wie im ersten bzw. vorhergehenden Ausführungsbeispiel.

Im Unterschied zu dem vorhergehenden Ausführungsbeispiel ist nun eine der Halbleiterstrahlungsquellen 36, deren Emissionsspektrum sich mit seiner charakteristischen Emissionswellenlänge zwischen wenigstens zwei Emissionsspektren bzw. den Schwerpunktwellenlängen dieser Emissionsspektren befindet, im Beispiel die Halbleiterstrahlungsquelle 36.3 so angeordnet, daß sie nur einen der Farbteiler 37, nämlich den Farbteiler 37.3' durchstrahlt, bevor ihre Strahlung in den gemeinsamen Beleuchtungsstrahlengangabschnitt eingekoppelt wird. Dies ist insbesondere dann vorteilhaft, wenn die Halbleiterstrahlungsquelle besonders leistungsschwach im Verhältnis zu den anderen ist. Nach dem derzeitigen Stand der Technik ist dies beispielsweise bei grünen Leuchtdioden der Fall. Zusätzlich besteht hier noch die Möglichkeit, diese Halbleiterstrahlungsquelle näher an dem Farbteiler anzuordnen, so daß sie mit maximaler Effizienz in die Homogenisierungseinrichtung 26 eingekoppelt werden kann.

Die Transmission der Farbteiler ist in der zu Fig. 4 analogen Darstellung in Fig. 10 gezeigt. Darin sind für jeden der Farbteiler die Emissionsspektren der Leuchtdioden durch gepunktete Linien und die Transmission des jeweiligen Farbteilers als durchgezogene, mit dem Bezugszeichen des Farbteilers markierte Linie dargestellt. Im Unterschied zu dem vorhergehenden Ausführungsbeispiel hat der Farbteiler 37.3' nun keine Stufencharakteristik, sondern wirkt als Bandpaß für die optische Strahlung der ihm zugeordneten Leuchtdiode 36.3. Die anderen Farbteiler sind, bis auf den Farbteiler 37.4, der dem aus dem vorletzten Ausführungsbeispiel entspricht, gegenüber dem vorhergehenden Ausführungsbeispiel unverändert.

Weitere bevorzugte Ausführungsformen können Änderung der Anzahl der Halbleiterstrahlungsquellen und der Anzahl der Farbteiler Halbleiterstrahlungsquellen oder durch Hinzufügen von Halbleiterstrahlungsquellen mit passenden Farbteilern variiert werden.

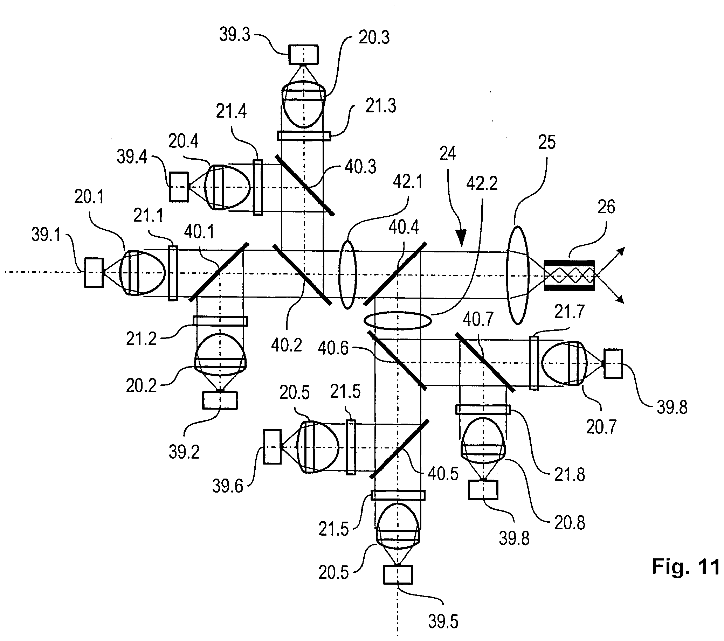

Als weiteres Ausführungsbeispiel zeigt Fig. 11 eine Beleuchtungsvorrichtung mit 2^{N} Halbleiterstrahlungsquellen 39.1 bis 39.8 mit jeweils verschiedenen Emissionsspektren und 2^{N}-1 Farbteilern 40.1 bis 40.7 für N=3, bei denen die Halbleiterstrahlungsquellen 39 an den Enden von Ästen eines binären Baums angeordnet sind und so Blätter des Baums darstellen. Die Verzweigungen oder Knoten des Baums werden durch die Farbteiler 40.1 bis 40.7 gebildet, deren Transmissionsbereiche analog zu den vorhergehenden Ausführungsbeispielen spektral angeordnet sind. Diese Beleuchtungsvorrichtung ist bezüglich der Optimierung der Energieeffizienz sehr günstig, da sie sehr kompakt aufgebaut ist. Die maximale "Packungsdichte" von Halbleiterstrahlungsquellen kann nämlich erreicht werden, wenn die Farbteiler in einem Baum mit 2^{N} Seitenarmen angeordnet werden. Auch hier sind zwischen den Halbleiterstrahlungsquellen und den Farbteilern jeweils Kollimationseinrichtungen 20.1 bis 20.8 und als Interferenzfilter ausgebildete Anregungsfilter 21.1 bis 21.8 angeordnet, die analog zu dem zweiten Ausführungsbeispiel ausgebildet sind.

Vor dem letzten Farbteiler 40.4 sind noch zwei optionale zusätzliche Kollimationsoptiken 42.1 und 42.2 vorgesehen, die eine noch bessere Kollimation bewirken.

Obwohl in den Ausführungsbeispielen die Halbleiterstrahlungsquellen und die Farbteiler in einer Ebene angeordnet sind, braucht dies nicht unbedingt der Fall zu sein. Vielmehr können diese um Abschnitte des Gesamtstrahlengangs gedreht sein, um eine für die Verwendung möglichst gut geeignete Form der Beleuchtungsvorrichtung zu erzielen.

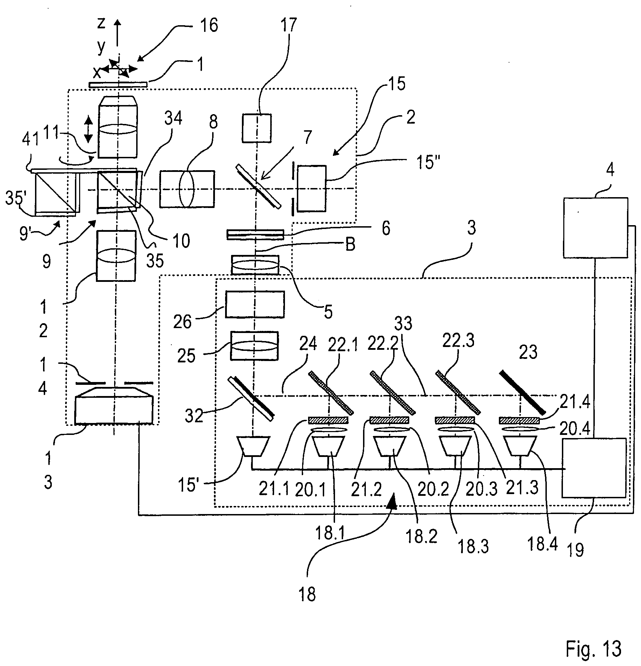

Eine weitere, in Fig. 13 schematisch gezeigte Untersuchungsvorrichtung unterscheidet sich von der Untersuchungsvorrichtung des Beispiels der Figur 1 dadurch, daß diese nun eine Aufnahme 41 für wenigstens zwei Filterwürfel 9, 9' mit Anregungs- und Emissionsfiltersätzen aufweist, mittels derer jeweils einer der Filterwürfel in einen Detektionsstrahlengang der Vorrichtung bewegbar ist. Die Filterkanten der Multiband-Filter 35, 35' sind vorzugsweise um einen Abstand zwischen 10 nm und 90 nm relativ zueinander verschoben. Die Aufnahme 41, im vorliegenden Beispiel ein Filterrad, ist vorzugsweise mittels eines in Fig. 13 nicht gezeigten motorischen Antriebs auf entsprechende Signale der Steuer- und Auswerteeinheit 4 hin bewegbar, im Beispiel drehbar.

Da in der Regel mehr Emissionswellenlängenbereiche der Beleuchtungsvorrichtung zur Verfügung stehen als Banden pro Multiband-Filtersatz, kann durch die Verwendung des Filterrades eine hohe Flexibilität erreicht werden.

Eine weitere bevorzugte Ausführungsform einer Beleuchtungsvorrichtung unterscheidet sich von der Beleuchtungsvorrichtung in Fig. 1 dadurch, daß an einem Gehäuse der Beleuchtungsvorrichtung Bedienungselemente, beispielsweise Schalter, vorgesehen sind, mittels derer die Halbleiterstrahlungsquellen einzeln oder in Kombination ein- und ausschaltbar sind.

Die Fig. 12 b) und 12c) zeigen zwei weitere Alternativen für die Kollimationseinrichtungen, bei ansonsten unveränderten Beleuchtungsvorrichtungen der vorhergehenden Ausführungsbeispiele.

In Fig. 12b) ist zusätzlich zu einer asphärischen Linse 29 auf dem Leuchtdioden-Chip 28 ein diffraktives oder holographisches Element 43 vorgesehen, das die Strahlungsausbeute der Leuchtdiode erhöht, indem es die Strahlung besser in die asphärische Linse 29 einkoppelt.

In Fig. 12c) ist anstelle der asphärischen Linse 29 ein Strahlungs- bzw. Lichtkonzentrator 44 aus Kunststoff oder Glas im Strahlengang vor der Leuchtdiode angeordnet, der das in den Konzentrator eintretende Licht durch Totalreflexion an den Grenzflächen des Lichtkonzentrators kollimiert.

Eine andere bevorzugte Ausführungsform unterscheidet sich von dem Beispiel der Figur 3 durch die Ausbildung einer der Halbleiterstrahlungsquellen. Um eine optische Strahlung im Wellenlängenbereich um 570 nm bereitstellen zu können, wird eine Leuchtdiode zur Abgabe von blauem Licht oder eine Leuchtdiode zur Abgabe von UV-Strahlung verwendet, die Leuchtstoffe enthält, die zu einer Strahlungsemission im gewünschten Spektralbereich führen. Das UV-Licht bzw. blaue Licht der Leuchtdiode wird dabei über Fluoreszenz oder Phosphoreszenz in Licht in dem gewünschten Wellenlängenbereich, d.h. einer anderen Farbe, konvertiert.

Die oben genannten Untersuchungsvorrichtungen können zur Bestimmung der Konzentration der vorgegebenen Fluoreszenzfarbstoffe verwendet werden. Die Filterbanden und die charakteristischen Emissionswellenlängen sind dabei so aufeinander abgestimmt, daß die Fluoreszenzanregung und -detektion bei den vorgegebenen Fluoreszenzfarbstoffen möglichst effizient ist.

Wenn die Anregungs- und Fluoreszenzspektren für M (M positive natürliche Zahl) Fluoreszenzfarbstoffe sowie die Emissionsspektren der Halbleiterstrahlungsquellen und der Filter bekannt sind, können prinzipiell mit M spektral unterschiedlichen Messungen die Konzentrationen der M Fluoreszenzfarbstoffe in der Probe 1 ermittelt werden. Um spektral unterschiedliche Messungen zu erhalten, muß wenigstens eine Anregungswellenlänge oder eine Fluoreszenzwellenlänge anders sein als bei den übrigen Messungen. Anregungsseitig läßt sich dies durch An- oder Ausschalten der einzelnen Halbleiterstrahlungsquellen realisieren. Eine andere Möglichkeit besteht darin, den Multiband-Filtersatz zu wechseln.

Vorzugsweise werden bei den Messungen jedoch mehrere Anregungswellenlängen durch Anschalten von wenigstens zwei der Halbleiterstrahlungsquellen simultan verwendet.

Die Untersuchungsvorrichtung des des Beispiels der Figur 1 kann insbesondere für die Durchführung eines Verfahrens zur Messung der Konzentration von einer Anzahl M von vorgegebenen Fluoreszenzfarbstoffen in der Probe 1 verwendet werden. Dabei werden M Messungen durchgeführt, wobei bei jeder der Messungen eine andere Anzahl kleiner oder gleich M von Emissionswellenlängenbereichen, die den Anregungsspektren der Fluoreszenzfarbstoffe entsprechen, zur Bildung von Anregungsstrahlung verwendet, die Probe mit der Anregungsstrahlung bestrahlt und die resultierende Fluoreszenzstrahlung detektiert wird, und wobei aus den Detektionsresultaten der M Messungen die Konzentration der Fluoreszenzfarbstoffe ermittelt wird.

Dies sei am Beispiel einer Probe mit M=3 vorgegebenen Fluoreszenzfarbstoffen, im Beispiel FITC, CY3 und Cy5, beschrieben.

Hierzu wird ein 3-Band-Filtersatz, beispielsweise das Filterset 61005 der Firma Chroma Technology, eingesetzt. Mit jeder zusätzlichen Messung wird zusätzlich zu den bei der vorhergehenden Messung verwendeten Emissionsbändern ein weiteres Emissionsband verwendet, d.h. bei den Messungen werden sukzessiv immer mehr Emissionsbänder verwendet. So wird bei der ersten Messung nur eine Halbleiterstrahlungsquelle, im Beispiel die blaue Leuchtdiode, eingeschaltet. Bei der zweiten Messung wird eine zusätzliche Halbleiterstrahlungsquelle eingeschaltet, so daß die blaue und die grüne Leuchtdiode verwendet werden. Bei der dritten Messung wird schließlich durch Einschalten der dritten Halbleiterstrahlungsquelle, im Beispiel der roten Leuchtdiode, noch ein weiteres Emissionsspektrum hinzugenommen, so daß alle drei Leuchtdioden arbeiten und Emissionsstrahlung bzw. Anregungsstrahlung Im blauen, grünen und roten Bereich simultan zur Verfügung steht.

Die drei Messungen liefern dann ein lineares Gleichungssystem mit Konzentrationen für die drei Fluoreszenzfarbstoffe als unbekannten Größen. Das Gleichungssystem, das tridiagonal ist, ist mit bekannten mathematischen Verfahren (vgl. beispielsweise William H. Press, Saul A. Teukolsky, William T. Vetterling: "Numerical Receipes in C", 2nd edition, Cambridge University Press 1999, ISBN: 0521431085) eindeutig lösbar und die Konzentrationsverhältnisse sind somit bestimmbar. Dabei werden Übersprecheffekte, die bei Verwendung mehrerer Anregungsbänder auftreten können, eliminiert.

Die Genauigkeit der Konzentrationsbestimmung kann durch weitere Messungen, insbesondere auch mit anderen Anregungswellenlängen, erhöht werden.

Hierzu kann insbesondere ein Filtersatz verwendet werden, bei dem alle Filterkanten um einige 10 nm zu höheren oder niedrigeren Wellenlängen gegenüber dem ersten Filtersatz verschoben sind. Dadurch werden andere Bereiche der Anregungs- und Emissionsspektren der Fluoreszenzfarbstoffe genutzt, was zusätzlich Information liefert.

Die für die Mikroskopie aufgeführten Vorteile der erfindungsgemäßen Beleuchtungsquelle lassen sich auch für andere Anwendungen nutzen. Beispielsweise kann sie als Beleuchtung für digitale Projektionssysteme verwendet werden, wenn ein besonders umfangreicher Farbraum abgedeckt werden soll. Ein Einsatz für allgemeine Beleuchtungszwecke ist ebenfalls denkbar, wenn es auf schnelle Variierbarkeit des Farbspektrums ankommt. Insbesondere können optische Vorrichtungen zur Untersuchung des Auges oder Vorrichtungen zur Untersuchung von menschlichem oder tierischem Gewebe, beispielsweise, Operationsmikroskope, oder Vorrichtungen zur Untersuchungen des Auges wie z. B. Funduskameras mit einer Beleuchtungsvorrichtung nach einem der vorhergehenden Ausführungsbeispiele ausgestattet sein.

Die Beleuchtungsvorrichtung erlaubt dabei jeweils eine farbgetreue Darstellung mittels Farbmanagement, sofern eine Beobachtung bzw. Detektion in Reflexion erfolgt. Unter Farbmanagement wird dabei insbesondere verstanden, daß bei der Vorrichtung die Beleuchtungsvorrichtung und eine Bilderfassungseinrichtung zur Erfassung von unter Beleuchtung durch die Beleuchtungsvorrichtung entstehenden Bildern eines Objekts die spektralen Eigenschaften der Beleuchtungsvorrichtung und der Bilderfassungseinrichtung so aufeinander abgestimmt werden, daß sich für einen menschlichen Betrachter die gleichen Farben ergeben wie bei Beobachtung mit dem Auge unter einer Standardbeleuchtung, beispielsweise einer Halogenlampe mit einer vorgegebenen Farbtemperatur, beispielsweise von 3200 K.

## Patentansprüche

1. Optische Vorrichtung, die zur Durchführung von Fluoreszenzuntersuchungen an einer Probe (1) ausgebildet ist, insbesondere Weitfeldmikroskop oder Fluoreszenz-Reader mit einer Beleuchtungsvorrichtung mit mindestens vier Halbleiterstrahlungsquellen (18; 36; 39) zur Abgabe von optischer Strahlung in jeweils unterschiedlichen Emissionswellenlängenbereichen, wobei wenigstens dreien der Halbleiterstrahlungsquellen (18; 36; 39) jeweils wenigstens ein Farbteiler (22.1, 22.2, 22.3; 37.1, 37.2, 37.3, 37.4; 40.1, ...40.7) zugeordnet ist, der für optische Strahlung der jeweiligen Halbleiterstrahlungsquelle (18; 36; 39) reflektiv ist, wobei die Halbleiterstrahlungsquellen (18; 36; 39) und die Farbteiler (22.1, 22.2, 22.3; 37.1, 37.2, 37.3, 37.4; 40.1, ...40.7) so angeordnet sind, dass die von jeder der Halbleiterstrahlungsquellen (18; 36; 39) jeweils abgegebene optische Strahlung in einen gemeinsamen Beleuchtungsstrahlengangabschnitt (24) eingekoppelt wird, wobei alle Halbleiterstrahlungsquellen (18; 36; 39) den gleichen Abstand zum letzten Farbteiler (37.4) aufweisen, wobei in Strahlengangabschnitten von den Halbleiterstrahlungsquellen (18; 36; 39) zu den Farbteilern (22.1, 22.2, 22.3; 37.1, 37.2, 37.3, 37.4; 40.1, ...40.7) jeweils eine Kollimationseinrichtung (20.1, 20.2, 20.3, 20.4) angeordnet ist, die die von der jeweiligen Halbleiterstrahlungsquelle (18; 36; 39) abgegebene optische Strahlung kollimiert, wobei in wenigstens einem Strahlengangabschnitt von einer der Halbleiterstrahlungsquellen (18; 36; 39) zu einem der Farbteiler (22.1, 22.2, 22.3; 37.1, 37.2, 37.3, 37.4; 40.1, ...40.7) zwischen der in dem Strahlengangabschnitt angeordneten Kollimationseinrichtung (20.1, 20.2, 20.3, 20.4) und dem Farbteiler (22.1, 22.2, 22.3; 37.1, 37.2, 37.3, 37.4; 40.1, ...40.7) wenigstens ein Anregungsbandfilter (21.1, ..., 21.7) angeordnet ist und dazu wenigstens ein Multiband-Emissionsfilter oder -filtersatz (35) in einem Detektionsstrahlengang für von einer Probe (1) ausgehende Fluoreszenzstrahlung aufweist.

2. Optische Vorrichtung nach Anspruch 1, die weiter eine Steuereinrichtung (19) umfasst, mittels derer die Halbleiterstrahlungsquellen (18; 36; 39) unabhängig voneinander an- und abschaltbar sind.

3. Optische Vorrichtung nach Anspruch 2, bei der die Steuereinrichtung (19) so ausgebildet ist, dass die Emissionsstrahlungsleistungen der Halbleiterstrahlungsquellen (18; 36; 39) unabhängig voneinander einstellbar sind.

4. Optische Vorrichtung nach einem der vorhergehenden Ansprüche, die über insgesamt fünf bis acht Halbleiterstrahlungsquellen (36; 39) mit jeweils verschiedenen Emissionswellenlängenbereichen verfügt.

5. Optische Vorrichtung nach einem der vorhergehenden Ansprüche, bei der Strahlengangabschnitte von den Halbleiterstrahlungsquellen (36) bis unmittelbar hinter den letzten Farbteiler (37.4; 40.4) einen binären Baum bilden.

6. Optische Vorrichtung nach einem der vorhergehenden Ansprüche, bei der wenigstens eine der Kollimationseinrichtungen (20.1, 20.2, 20.3, 20.4) eine asphärische Linse (29) oder einen asphärischen Spiegel umfasst.

7. Optische Vorrichtung nach einem der vorhergehenden Ansprüche, die wenigstens eine Halbleiterstrahlungsquelle (18; 36; 39) mit wenigstens einem Leuchtstoff zur Farbkonversion umfasst, in deren Strahlengang ein Bandpassfilter (21.1, ..., 21.7) angeordnet ist und deren Strahlung ebenfalls in den gemeinsamen Beleuchtungsstrahlengangabschnitt (24) eingekoppelt wird.

8. Optische Vorrichtung nach einem der vorhergehenden Ansprüche, bei der drei der Farbteiler (22.1, 22.2, 22.3; 37.1, 37.2, 37.3, 37.4; 40.1, ...40.7) in einem gleichen Strahlengangabschnitt der Beleuchtungsvorrichtung angeordnet sind und Filterkanten (38.1, ...38.3) bei Wellenlängen besitzen, die entlang des Strahlengangabschnitts monoton steigen oder fallen.

9. Optische Vorrichtung nach einem der vorhergehenden Ansprüche, bei der im gemeinsamen Beleuchtungsstrahlengangabschnitt (24) nach den Farbteilern (22.1, 22.2, 22.3; 37.1, 37.2, 37.3, 37.4; 40.1, ...40.7) eine Homogenisierungseinrichtung (26) angeordnet ist.

10. Optische Vorrichtung nach einem der vorhergehenden Ansprüche, bei der die Lichtleitwerte der Halbleiterstrahlungsquellen (18; 36; 39) und der nachfolgenden optischen Elemente (20, 25, 26) zur Maximierung des Energieflusses der abzugebenden Strahlung aneinander angepasst sind.

11. Optische Vorrichtung nach einem der vorhergehenden Ansprüche, bei der Steuereinrichtung (19) dazu ausgebildet ist, wenigstens zwei der Halbleiterstrahlungsquellen (18; 36; 39) zur Erzeugung von Weißlicht variabler Farbtemperatur über additive Farbmischung der von den wenigstens zwei Halbleiterstrahlungsquellen (18; 36; 39) abgegebenen optischen Strahlung anzusteuern.

12. Optische Vorrichtung nach Anspruch 1, bei der der Multiband-Emissionsfilter (35) in einem Filterwürfel (9) enthalten ist, der weiter einen im Beleuchtungsstrahlengang der Untersuchungsvorrichtung angeordneten Multiband-Anregungsfilter (34) oder -filtersatz und einen Multiband-Farbteiler (10) zur Umlenkung der Beleuchtungsstrahlung der Beleuchtungsvorrichtung (3) oder von der Probe (1) ausgehender Fluoreszenzstrahlung aufweist.

13. Optische Vorrichtung nach Anspruch 1, bei der wenigstens eines der Emissionsspektren der Beleuchtungsvorrichtung (3) mit seiner charakteristischen Wellenlänge zwischen zwei Emissionswellenlängenbereichen des Multiwellenband-Emissionsfilters (35) liegt.

14. Optische Vorrichtung nach Anspruch 1, die mindestens zwei Multiband-Filter aufweist, deren Filterkanten um einen Abstand zwischen 10 nm und 90 nm relativ zueinander verschoben sind.

15. Optische Vorrichtung nach Anspruch 1, die eine Aufnahme (41) für wenigstens zwei Filterwürfel (9, 9') aufweist, mittels derer jeweils einer der Filterwürfel (9, 9'9 in einen Detektionsstrahlengang der Vorrichtung bewegbar ist.

16. Verfahren zur Messung der Konzentration von einer Anzahl M von vorgegebenen Fluoreszenzfarbstoffen in einer Probe (1), bei dem M Messungen mit einer Fluoreszenzuntersuchungsvorrichtung nach einem der Ansprüche 1 bis 15, durchgeführt werden, wobei bei jeder der Messungen eine andere Anzahl kleiner oder gleich N von Emissionswellenlängenbereichen, die den Anregungsspektren der Fluoreszenzfarbstoffe entsprechen, zur Bildung von Anregungsstrahlung verwendet, die Probe mit der Anregungsstrahlung bestrahlt und die resultierende Fluoreszenzstrahlung detektiert wird, und wobei aus den Detektionsresultaten der M Messungen die Konzentration der Fluoreszenzfarbstoffe ermittelt wird.

## Claims

1. Optical device, which is embodied to implement fluorescence examinations of a sample (1), in particular a widefield microscope or a fluorescence reader having an illumination device with at least four semiconductor radiation sources (18; 36; 39) for emission of optical radiation in different emission wavelength ranges in each case, wherein at least one colour splitter (22.1, 22.2, 22.3; 37.1, 37.2, 37.3, 37.4; 40.1, ...40.7) in each case is assigned to at least three of the semiconductor radiation sources (18; 36; 39), which colour splitter is reflective for optical radiation of the respective semiconductor radiation source (18; 36; 39), wherein the semiconductor radiation sources (18; 36; 39) and the colour splitters (22.1, 22.2, 22.3; 37.1, 37.2, 37.3, 37.4; 40.1, ...40.7) are arranged so that the optical radiation emitted by each of the semiconductor radiation sources (18; 36; 39) respectively is coupled into a common illumination beam path section (24), wherein all of the semiconductor radiation sources (18; 36; 39) have the same distance to the last colour splitter (37.4), wherein a collimation apparatus (20.1, 20.2, 20.3, 20.4) is arranged in each of the beam path sections from the semiconductor radiation sources (18; 36; 39) to the colour splitters (22.1, 22.2, 22.3; 37.1, 37.2, 37.3, 37.4; 40.1, ...40.7) and collimates the optical radiation emitted by the respective semiconductor radiation source (18; 36; 39), wherein in at least one beam path section from one of the semiconductor radiation sources (18; 36; 39) to one of the colour splitters (22.1, 22.2, 22.3; 37.1, 37.2, 37.3, 37.4; 40.1, ...40.7) at least one excitation band filter (21.1, ..., 21.7) is arranged between the collimation apparatus (20.1, 20.2, 20.3, 20.4) that is arranged in the beam path section and the colour splitter (22.1, 22.2, 22.3; 37.1, 37.2, 37.3, 37.4; 40.1, ...40.7) and for this purpose comprises at least one multiband emission filter or filter set (35) in a detection beam path for fluorescence radiation emitted from a sample (1).

2. Optical device according to Claim 1, which further comprises a control apparatus (19), with which the semiconductor radiation sources (18; 36; 39) are switchable on and off independently of each other.

3. Optical device according to Claim 2, wherein the control apparatus (19) is embodied so that the emission radiant fluxes of the semiconductor radiation sources (18; 36; 39) are settable independently of each other.

4. Optical device according to one of the preceding claims, which comprises five to eight semiconductor radiation sources (36; 39) overall, each with different emission wavelength ranges.

5. Optical device according to one of the preceding claims, wherein the beam path sections from the semiconductor radiation sources (36) to directly behind the last colour splitter (37.4; 40.4) form a binary tree.

6. Optical device according to one of the preceding claims, wherein at least one of the collimation apparatuses (20.1, 20.2, 20.3, 20.4) comprises an aspheric lens element (29) or an aspheric mirror.

7. Optical device according to one of the preceding claims, which comprises at least one semiconductor radiation source (18; 36; 39) with at least one phosphor for colour conversion, in the beam path of which a bandpass filter (21.1, ..., 21.7) is arranged and whose radiation is likewise coupled into the common illumination beam path section (24).

8. Optical device according to one of the preceding claims, wherein three of the colour splitters (22.1, 22.2, 22.3; 37.1, 37.2, 37.3, 37.4; 40.1, ...40.7) are arranged in a same beam path section of the illumination device and have filter edges (38.1, ...38.3) at wavelengths, which increase or decrease monotonically along the beam path section.

9. Optical device according to one of the preceding claims, wherein a homogenization apparatus (26) is arranged in the common illumination beam path section (24) after the colour splitters (22.1, 22.2, 22.3; 37.1, 37.2, 37.3, 37.4; 40.1, ...40.7).

10. Optical device according to one of the preceding claims, wherein the etendues of the semiconductor radiation sources (18; 36; 39) and of the following optical elements (20, 25, 26) are adapted to each other to maximize the energy flux of the radiation to be emitted.

11. Optical device according to one of the preceding claims, wherein the control apparatus (19) is embodied to control at least two of the semiconductor radiation sources (18; 36; 39) to generate white light with a variable colour temperature via additive colour mixing of the optical radiation emitted by the at least two semiconductor radiation sources (18; 36; 39).

12. Optical device according to Claim 1, wherein the multiband emission filter (35) is included in a filter cube (9), which further comprises a multiband excitation filter (34) or filter set arranged in the illumination beam path of the examination device and a multiband colour splitter (10) for deflecting the illumination radiation of the illumination device (3) or fluorescence radiation emitted by the sample (1).

13. Optical device according to Claim 1, wherein at least one of the emission spectra of the illumination device (3) has its characteristic wavelength between two emission wavelength ranges of the multi-waveband emission filter (35).

14. Optical device according to Claim 1, which comprises at least two multiband filters, whose filter edges are shifted relative to one another by a distance of between 10 nm and 90 nm.

15. Optical device according to Claim 1, which comprises a mount (41) for at least two filter cubes (9, 9'), by means of which mount one of the filter cubes (9, 9') is movable into a detection beam path of the device in each case.

16. Method for measuring the concentration of a number M of specified fluorescence dyes in a sample (1), wherein M measurements are carried out with a fluorescence examination device according to one of Claims 1 to 15, wherein for each of the measurements another number smaller than or equal to N of emission wavelength ranges, which correspond to the excitation spectra of the fluorescence dyes, is used to form the excitation radiation, the sample is irradiated with the excitation radiation and the resulting fluorescence radiation is detected, and wherein the concentration of the fluorescence dyes is determined from the detection results of the M measurements.

## Revendications

1. Arrangement optique, qui est configuré pour réaliser des analyses par fluorescence sur un échantillon (1), notamment microscope à champ large ou lecteur de fluorescence comprenant un arrangement d'éclairage pourvu d'au moins quatre sources de rayonnement à semiconducteur (18 ; 36 ; 39) destinées à délivrer un rayonnement optique dans des plages de longueurs d'onde d'émission respectivement différentes, au moins un séparateur de couleurs (22.1, 22.2, 22.3 ; 37.1, 37.2, 37.3, 37.4 ; 40.1, ..., 40.7) étant respectivement associé à au moins trois des sources de rayonnement à semiconducteur (18 ; 36 ; 39), lequel est réfléchissant pour le rayonnement optique de la source de rayonnement à semiconducteur (18 ; 36 ; 39) respective, les sources de rayonnement à semiconducteur (18 ; 36 ; 39) et les séparateurs de couleurs (22.1, 22.2, 22.3 ; 37.1, 37.2, 37.3, 37.4 ; 40.1, ..., 40.7) étant disposés de telle sorte que le rayonnement optique respectivement délivré par chacune des sources de rayonnement à semiconducteur (18 ; 36 ; 39) est injecté dans une portion de trajet de rayon d'éclairage commune (24), toutes les sources de rayonnement à semiconducteur (18 ; 36 ; 39) présentant le même écart par rapport au dernier séparateur de couleurs (37.4), un dispositif de collimation (20.1, 20.2, 20.3, 20.4) étant respectivement disposé dans les portions de trajet de rayon des sources de rayonnement à semiconducteur (18 ; 36 ; 39) aux séparateurs de couleurs (22.1, 22.2, 22.3 ; 37.1, 37.2, 37.3, 37.4 ; 40.1, ..., 40.7), lequel collimate le rayonnement optique délivré par la source de rayonnement à semiconducteur (18 ; 36 ; 39) respective, au moins un filtre passe-bande d'excitation (21.1, ..., 21.7) étant disposé dans au moins une portion de trajet de rayon de l'une des sources de rayonnement à semiconducteur (18 ; 36 ; 39) à l'un des séparateurs de couleurs (22.1, 22.2, 22.3 ; 37.1, 37.2, 37.3, 37.4 ; 40.1, ..., 40.7), entre le dispositif de collimation (20.1, 20.2, 20.3, 20.4) disposé dans la portion de trajet de rayon et le séparateur de couleurs (22.1, 22.2, 22.3 ; 37.1, 37.2, 37.3, 37.4 ; 40.1, ..., 40.7), et possédant à cet effet au moins un filtre ou un jeu de filtres d'émission multibande (35) dans un trajet de rayon de détection pour un rayonnement de fluorescence émanant d'un échantillon (1).

2. Arrangement optique selon la revendication 1, lequel comporte en outre un dispositif de commande (19) au moyen duquel les sources de rayonnement à semiconducteur (18 ; 36 ; 39) peuvent être mises en circuit et hors circuit indépendamment les unes des autres.

3. Arrangement optique selon la revendication 2, dans lequel le dispositif de commande (19) est configuré de telle sorte que les puissances de rayonnement d'émission des sources de rayonnement à semiconducteur (18 ; 36 ; 39) peuvent être réglées indépendamment les unes des autres.

4. Arrangement optique selon l'une des revendications précédentes, lequel dispose au total de cinq à huit sources de rayonnement à semiconducteur (36 ; 39) ayant respectivement des plages de longueurs d'onde d'émission différentes.

5. Arrangement optique selon l'une des revendications précédentes, dans lequel les portions de trajet de rayon des sources de rayonnement à semiconducteur (36) jusqu'immédiatement derrière le dernier séparateur de couleurs (37.4 ; 40.4) forment un arbre binaire.

6. Arrangement optique selon l'une des revendications précédentes, dans lequel les dispositifs de collimation (20.1, 20.2, 20.3, 20.4) comportent une lentille asphérique (29) ou un miroir asphérique.

7. Arrangement optique selon l'une des revendications précédentes, lequel comporte au moins une source de rayonnement à semiconducteur (18 ; 36 ; 39) pourvue d'au moins une substance fluorescente servant à la conversion de couleur, dans le trajet de rayon de laquelle est disposé un filtre passe-bande (21.1, ..., 21.7) et dont le rayonnement est également injecté dans la portion de trajet de rayon d'éclairage commune (24).

8. Arrangement optique selon l'une des revendications précédentes, dans lequel trois des séparateurs de couleurs (22.1, 22.2, 22.3 ; 37.1, 37.2, 37.3, 37.4 ; 40.1, ..., 40.7) sont disposés dans une même portion de trajet de rayon de l'arrangement d'éclairage et possèdent des bords filtrants (38.1, ..., 38.3) à des longueurs d'onde qui croissent ou chutent de manière monotone le long de la portion de trajet de rayon.

9. Arrangement optique selon l'une des revendications précédentes, dans lequel un dispositif d'homogénéisation (26) commun est disposé dans la portion de trajet de rayon d'éclairage commune (24) après les séparateurs de couleurs (22.1, 22.2, 22.3 ; 37.1, 37.2, 37.3, 37.4 ; 40.1, ..., 40.7) .

10. Arrangement optique selon l'une des revendications précédentes, dans lequel les facteurs de guidage de lumière des sources de rayonnement à semiconducteur (18 ; 36 ; 39) et des éléments optiques (20, 25, 26) qui suivent sont adaptés les uns aux autres en vue de maximiser le flux d'énergie du rayonnement à délivrer.

11. Arrangement optique selon l'une des revendications précédentes, dans lequel le dispositif de commande (19) est configuré pour attaquer au moins deux des sources de rayonnement à semiconducteur (18 ; 36 ; 39) en vue de générer de la lumière blanche à température de couleur variable par le biais d'un mélange de couleurs additif du rayonnement optique délivré par les au moins deux sources de rayonnement à semiconducteur (18 ; 36 ; 39) .

12. Arrangement optique selon la revendication 1, dans lequel le filtre d'émission multibande (35) est contenu dans un cube filtrant (9) qui possède en outre un filtre ou un jeu de filtres d'excitation multibande (34) et un séparateur de couleurs multibande (10) disposés dans le trajet de rayon d'éclairage de l'arrangement d'analyse pour dévier le rayonnement d'éclairage de l'arrangement d'éclairage (3) ou le rayonnement de fluorescence émanant de l'échantillon (1).

13. Arrangement optique selon la revendication 1, dans lequel au moins un spectre d'émission de l'arrangement d'éclairage (3) se trouve, avec sa longueur d'onde caractéristique, entre deux plages de longueurs d'onde d'émission du filtre d'émission multibande (35).

14. Arrangement optique selon la revendication 1, lequel possède au moins deux filtres multibande dont les bords filtrants sont décalés d'un écart de 10 nm et de 90 nm les uns des autres.

15. Arrangement optique selon la revendication 1, lequel possède un logement (41) pour au moins deux cubes filtrants (9, 9') au moyen duquel l'un des cubes filtrants (9, 9') peut respectivement être déplacé dans un trajet de rayon de détection de l'arrangement.

16. Procédé de mesure de la concentration d'un nombre M de colorants fluorescents dans un échantillon (1), dans lequel M mesures sont réalisées avec un arrangement d'analyse par fluorescence selon l'une des revendications 1 à 15, un nombre différent inférieur ou égal à N de plages de longueurs d'onde d'émission, lesquelles correspondent aux spectres d'excitation des colorants fluorescents, étant utilisé à chacune des mesures pour former un rayonnement d'excitation, l'échantillon étant irradié avec le rayonnement d'excitation et le rayonnement de fluorescence résultant étant détecté, la concentration des colorants fluorescents étant déterminée à partir des résultats de détection des M mesures.
